(19) Europäisches Patentamt
European Patent Office
Office européen des brevets

(11) **EP 4 804 668 A1**

(12) **EUROPEAN PATENT APPLICATION**
published in accordance with Art. 153(4) EPC

(43) Date of publication:
**09.09.2026 Bulletin 2026/37**

(21) Application number: **24910692.3**

(22) Date of filing: **10.12.2024**

(51) International Patent Classification (IPC):
***H04W 72/04*** *(2023.01)*

(52) Cooperative Patent Classification (CPC):
**H04B 7/145; H04B 7/155; H04W 72/04; H04W 72/044; H04W 72/0453; H04W 72/231; H04W 72/232**

(86) International application number:
**PCT/CN2024/138118**

(87) International publication number:
**WO 2025/139761 (03.07.2025 Gazette 2025/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **25.12.2023 CN 202311800807**

(71) Applicant: **Huawei Technologies Co., Ltd.**
**Shenzhen, Guangdong 518129 (CN)**

(72) Inventors:
- **PENG, Zhongchong**
  **Shenzhen, Guangdong 518129 (CN)**
- **YAN, Mao**
  **Shenzhen, Guangdong 518129 (CN)**
- **LIU, Fengwei**
  **Shenzhen, Guangdong 518129 (CN)**

(74) Representative: **Gill Jennings & Every LLP**
**The Broadgate Tower**
**20 Primrose Street**
**London EC2A 2ES (GB)**

# (54) RELAY CONFIGURATION METHOD, AND RELATED APPARATUS

(57) A relay configuration method and related apparatus are provided. The method includes: receiving first indication information from a network device, where the first indication information is used to determine a frequency band for a forwarding unit of the relay; and performing signal forwarding on the frequency band. When the forwarding unit and the control unit of the relay operate on different frequency bands, the relay may determine the frequency band for the forwarding unit based on the first indication information from the network device, and then perform signal forwarding on the frequency band, thereby facilitating flexible resource configuration, for example, facilitating flexible configuration of the operating frequency band for the forwarding unit of the relay.

500
Relay
Network device
510: generate first indication information, where the first indication information is used to determine the frequency band of the relay's forwarding unit.
520: the first indication information
530: forward a signal on the frequency band of the forwarding unit.
Figure 5

EP 4 804 668 A1

## Description

This application claims priority to Chinese Patent Application No. 202311800807.9, filed with the State Intellectual Property Office of China on December 25, 2023, and entitled "A Relay Configuration Method and Related Apparatus," which is incorporated herein by reference in its entirety.

## Technical Field

This application relates to the communications field, and in particular, to a relay configuration method and related apparatus.

## Background Technology

Direct communication between a network device and a terminal may be impossible due to high path loss. One solution is to use a network controlled repeater (network controlled repeater, NCR) (hereinafter referred to as a repeater) to assist communication between the network device and the terminal. The repeater mainly includes a mobile terminal (mobile terminal, MT) unit (which may also be referred to as a control unit) and a forwarding (forwarding, Fwd) unit. The control unit is configured to exchange messages with the network device. For example, beam control, amplification (or output power) control, uplink forwarding direction control, downlink signal forwarding direction control, and on/off control are all interactions between the control unit and the network device. The forwarding unit is configured to forward a signal. For example, the forwarding unit does not need to demodulate the signal, and may directly amplify and forward the signal.

Currently, the control unit and the forwarding unit share a same frequency band (band), that is, the frequency bands of the control unit and the forwarding unit are the same. For example, the frequency bands of the control unit and the forwarding unit may be preset when the repeater is delivered from the factory. Therefore, the frequency band configuration of the forwarding unit is not flexible enough.

## SUMMARY OF INVENTION

This application provides a relay configuration method and a related apparatus, to improve flexibility of configuring a forwarding unit.

According to a first aspect, this application provides a relay configuration method. The method may be performed by a communications apparatus. The communications apparatus may be a relay, or may be a component (such as a chip or a chip system) configured in a relay, or may be a logical module or software that can implement all or some relay functions. This is not limited in this application.

For example, the method includes: receiving first indication information from a network device, where the first indication information is used to determine a frequency band of a forwarding unit of a relay; and forwarding a signal on the frequency band.

The frequency band of the forwarding unit may also be referred to as an operating frequency band of the forwarding unit, or a frequency band used for signal forwarding. In other words, the forwarding unit works on the frequency band. Optionally, the frequency band may be replaced with another tenn for indicating a frequency domain unit, such as a frequency band or a component carrier (component carrier, CC). This is not limited in this application.

In addition, it should be noted that, in the relay, one control unit may correspond to one or more forwarding units. In this application, an example in which a frequency band of one forwarding unit in one or more forwarding units is determined is used for description.

In the foregoing technical solution, the relay may determine the frequency band of the forwarding unit based on the first indication information from the network device, and then forward a signal on the frequency band, thereby helping improve flexibility of resource configuration, for example, helping flexibly configure a working frequency band of the forwarding unit of the relay.

With reference to the first aspect, in some possible implementations of the first aspect, the first indication information is used to indicate the frequency band of the forwarding unit.

In a possible design, the first indication information includes an index of the frequency band of the forwarding unit.

The correspondence between one or more indexes of the forwarding unit and one or more frequency bands may be predefined or preconfigured, and each index corresponds to one frequency band. For example, the correspondence between one or more indexes of the forwarding unit and one or more frequency bands is preconfigured, and the method further includes: receiving, by the relay, first configuration information from an operation, administration, and maintenance (OAM), where the first configuration information is used to configure the correspondence between one or more indexes of the forwarding unit and one or more frequency bands, and each index corresponds to one frequency band. In other words, the OAM may configure the correspondence between one or more indexes of the forwarding unit and one or more

frequency bands for the relay.

In another possible design, the first indication information includes a start frequency and an end frequency of the frequency band of the forwarding unit, or the first indication information includes a center frequency and a bandwidth of the frequency band of the forwarding unit.

In other words, the network device may directly indicate the start frequency and the end frequency of the frequency band of the forwarding unit, or the center frequency and the bandwidth of the frequency band to the relay.

With reference to the first aspect, in some possible implementations of the first aspect, the first indication information is carried in a radio resource control (radio resource control, RRC) message, where the RRC message is used to configure one or more forwarding resource sets, each forwarding resource set includes one or more forwarding resources, each forwarding resource set corresponds to one frequency band of the forwarding unit, each forwarding resource corresponds to one frequency band of the forwarding unit, or one or more forwarding resource sets correspond to one frequency band of the forwarding unit.

That each forwarding resource set corresponds to one frequency band of the forwarding unit may be understood as that one or more forwarding resources in the forwarding resource set correspond to frequency bands of the forwarding unit that are the same. That each forwarding resource corresponds to one frequency band of the forwarding unit may be understood as that frequency bands of the forwarding units corresponding to different forwarding resources may be the same or may be different, and each forwarding resource corresponds to one frequency band of the forwarding unit. That one or more forwarding resource sets correspond to one frequency band of the forwarding unit may be understood as that all forwarding resources correspond to one frequency band of the forwarding unit, where all forwarding resources may include, for example, periodic forwarding resources, semi-persistent forwarding resources, and aperiodic forwarding resources.

When the foregoing forwarding resource is a semi-persistent forwarding resource, a frequency band of the forwarding unit may be activated/deactivated through a media access control (media access control, MAC) control element (control element, CE) (the following uses an example in which the frequency band of the forwarding unit is activated). In this case, the method further includes: receiving a MAC CE from the network device, where the MAC CE is used to activate the frequency band of the forwarding unit.

A possible design is that a logical channel identifier (logical channel identifier, LCID) in the MAC CE is used to identify the frequency band of the forwarding unit for which the MAC CE is used to activate/deactivate the frequency band, where the LCID may be an extended logical channel identifier (extended LCID, eLCID). Alternatively, the MAC CE is an NCR access link frequency band indication MAC CE, and the NCR access link frequency band indication MAC CE is identified by a MAC subheader with an eLCID. It can be learned that the MAC CE may be an extended MAC CE, or the MAC CE is a predefined MAC CE specially used to activate the frequency band of the forwarding unit.

In another possible design, the MAC CE includes a first field and a second field, where the first field is used to activate a frequency band of the forwarding unit, and the second field is used to activate an access-side beam corresponding to each forwarding resource in the forwarding resource set, where the forwarding resource set includes at least one forwarding resource. In other words, an existing MAC CE may be reused, for example, a MAC CE used to activate access-side beams corresponding to each forwarding resource in the forwarding resource set. That is, the MAC CE may be used to activate access-side beams corresponding to each forwarding resource in the forwarding resource set, and may also be used to activate a frequency band of the forwarding unit.

When the foregoing forwarding resource is an aperiodic forwarding resource, the frequency band of the forwarding unit may be activated (or indicated) by using downlink control information (downlink control information, DCI). In this case, the method further includes: receiving downlink control information (DCI) from the network device, where the DCI is used to activate the frequency band of the forwarding unit.

The DCI may be predefined DCI (for example, DCI 2_9) used to activate the frequency band of the forwarding unit, or may be obtained by multiplexing existing DCI (for example, DCI 2_8). This is not limited in this application.

Optionally, a length (or a bit width) of the field that is in the DCI and that is used to indicate the frequency band of the forwarding unit is preconfigured, or is determined based on a quantity of frequency bands of the forwarding unit configured in the RRC message.

With reference to the first aspect, in some possible implementations of the first aspect, before the receiving the first indication information, the method further includes: sending capability information to the network device, where the capability information is used to indicate one or more of the following: whether the relay device supports the control unit and the forwarding unit to work on different frequency bands, whether the forwarding unit of the relay device supports working on a plurality of adjacent frequency bands, a set of frequency bands supported by the forwarding unit, or a quantity of frequency bands included in each frequency band set.

The relay device may report the capability information to the network device, so that the network device configures, for the relay device, the frequency band for the forwarding unit based on the capability information of the relay device.

With reference to the first aspect, in some possible implementations of the first aspect, the first indication

information indicates a frequency band of the control unit of the relay; and the method further includes: determining a frequency band of the forwarding unit based on the frequency band of the control unit.

In other words, the relay may determine the frequency band of the forwarding unit based on the frequency band of the control unit indicated by the network device.

It may be understood that the first indication information indicates the frequency band of the control unit of the relay. In this way, the relay may also determine the frequency band of the control unit (or referred to as the operating frequency band of the control unit). In other words, the first indication information is further used to determine the frequency band of the control unit of the relay.

In a possible design, the first indication information includes an index of the frequency band of the control unit. In this case, the determining the frequency band of the forwarding unit based on the frequency band of the control unit includes: determining the frequency band of the forwarding unit based on the index of the frequency band of the control unit and the first offset and/or the first coefficient, where the first offset is an offset of the index of the frequency band, and the first coefficient is a coefficient for increasing or decreasing the bandwidth of the frequency band of the control unit.

Optionally, the first offset and/or the first coefficient are predefined or configured by the network device. This is not limited in this application.

In the foregoing design, one frequency band of the control unit may correspond to one index, and a correspondence between one or more indexes of the control unit and one or more frequency bands may be predefined or preconfigured. For example, the correspondence between one or more indexes of the control unit and one or more frequency bands is preconfigured, and the method further includes: receiving, by the relay, second configuration information from the OAM, where the second configuration information is used to configure the correspondence between one or more indexes of the control unit and one or more frequency bands, and each index corresponds to one frequency band.

In another possible design, the first indication information includes a start frequency and an end frequency of the frequency band of the control unit, or the first indication information includes a center frequency and a bandwidth of the frequency band of the control unit. In this case, the determining the frequency band of the forwarding unit based on the frequency band of the control unit includes: determining the frequency band of the forwarding unit based on the center frequency of the frequency band of the control unit and the second offset and/or the first coefficient, where the second offset is an offset of the center frequency of the frequency band, and the first coefficient is a coefficient for increasing or decreasing the bandwidth of the frequency band of the control unit.

It should be noted that the first offset is an offset of the index of the frequency band, the second offset is an offset of the center frequency of the frequency band, and the first offset and the second offset have different meanings. For example, the index of the frequency band may be 0, 1, 2, 3, or Q-1, the first offset may be 1, 2, or k, where Q and k are integers; the center frequency of the frequency band may be 870 megahertz (MHz), 880 MHz, 890 MHz, or the like, and the second offset may be 10 MHz, 20 MHz, or the like.

Optionally, the second offset and/or the first coefficient are/is predefined or configured by the network device. This is not limited in this application.

According to a second aspect, this application provides a relay configuration method. The method may be performed by a communications apparatus. The communications apparatus may be a network device, or may be a component (for example, a chip or a chip system) configured in a network device, or may be a logical module or software that can implement all or some functions of the network device. This is not limited in this application.

For example, the method includes: generating first indication information, where the first indication information is used to determine a frequency band of a relay forwarding unit; and sending the first indication information to the relay.

In the foregoing technical solution, the network device may send, to the relay, the first indication information used to determine the frequency band of the forwarding unit, so that the relay determines the frequency band of the forwarding unit based on the first indication information, thereby facilitating flexible resource configuration, for example, facilitating flexible configuration of an operating frequency band of the forwarding unit of the relay.

With reference to the second aspect, in some possible implementations of the second aspect, the first indication information is used to indicate the frequency band of the forwarding unit.

In a possible design, the first indication information includes an index of the frequency band of the forwarding unit. One frequency band of the forwarding unit corresponds to one index, and a correspondence between one or more indexes of the forwarding unit and one or more frequency bands may be predefined or preconfigured. For example, the correspondence between one or more indexes of the forwarding unit and one or more frequency bands is preconfigured, and the method further includes: receiving, by the network device, first configuration information from the OAM, where the first configuration information is used to configure the correspondence between the one or more indexes of the forwarding unit and the one or more frequency bands, and each index corresponds to one frequency band.

In another possible design, the first indication information includes a start frequency and an end frequency of the frequency band of the forwarding unit, or the first indication information includes a center frequency and a bandwidth of the frequency band of the forwarding unit.

With reference to the second aspect, in some possible implementations of the second aspect, the first indication information is carried in an RRC message, where the RRC message is used to configure one or more forwarding resource sets, each forwarding resource set includes one or more forwarding resources, each forwarding resource set corresponds to one frequency band of the forwarding unit, each forwarding resource corresponds to one frequency band of the forwarding unit, or one or more forwarding resource sets correspond to one frequency band of the forwarding unit.

When the foregoing forwarding resource is a semi-persistent forwarding resource, the network device may activate/deactivate the frequency band of the forwarding unit by using the MAC CE. In this case, the method further includes: sending a MAC CE to the relay, where the MAC CE is used to activate the frequency band of the forwarding unit.

A possible design is that the LCID in the MAC CE is used to identify the frequency band of the forwarding unit for which the MAC CE is used to activate the frequency band. In other words, the MAC CE is an NCR access link frequency band indication MAC CE, and the NCR access link frequency band indication MAC CE is identified by a MAC subheader with an eLCID. It can be learned that the MAC CE may be an extended MAC CE, or the MAC CE is a predefined MAC CE specially used to activate the frequency band of the forwarding unit.

In another possible design, the MAC CE includes a first field and a second field, where the first field is used to activate the frequency band of the forwarding unit, the second field is used to activate access-side beams corresponding to each forwarding resource in a forwarding resource set, and the forwarding resource set includes at least one forwarding resource. In other words, an existing MAC CE may be reused. For example, the MAC CE may be used to activate a MAC CE used to activate access-side beams corresponding to each forwarding resource in the forwarding resource set. That is, the MAC CE may be used to activate access-side beams corresponding to each forwarding resource in the forwarding resource set, and may also be used to activate the frequency band of the forwarding unit.

When the foregoing forwarding resource is an aperiodic forwarding resource, the network device may activate (or indicate) the frequency band of the forwarding unit by using the DCI. In this case, the method further includes: sending DCI to the relay, where the DCI is used to activate the frequency band of the forwarding unit.

The DCI may be predefined DCI (for example, DCI 2_9) used to activate the frequency band of the forwarding unit, or may be existing DCI (for example, DCI 2_8) multiplexed. This is not limited in this application.

Optionally, a length (or a bit width) of the field that is in the DCI and that is used to indicate the frequency band of the forwarding unit is preconfigured, or is determined based on a quantity of frequency bands of the forwarding unit configured in the RRC message.

With reference to the second aspect, in some possible implementations of the second aspect, before the sending the first indication information, the method further includes: receiving capability information from the relay, where the capability information is used to indicate one or more of the following: whether the relay supports the control unit and the forwarding unit to work on different frequency bands, whether the forwarding unit of the relay supports working on a plurality of adjacent frequency bands, a set of frequency bands supported by the forwarding unit, or a quantity of frequency bands included in each frequency band set.

The relay may report the capability information to the network device, so that the network device configures a frequency band of the forwarding unit for the relay based on the capability information of the relay.

With reference to the second aspect, in some possible implementations of the second aspect, the first indication information indicates a frequency band of the control unit of the relay.

In a possible design, the first indication information includes an index of the frequency band of the control unit.

In the foregoing design, one frequency band of the control unit may correspond to one index, and a correspondence between one or more indexes of the control unit and one or more frequency bands may be predefined or preconfigured. For example, the correspondence between one or more indexes of the control unit and one or more frequency bands is preconfigured. The method further includes: receiving, by the network device, second configuration information from the OAM, where the second configuration information is used to configure the correspondence between one or more indexes of the control unit and one or more frequency bands, and each index corresponds to one frequency band.

In another possible design, the first indication information includes a start frequency and an end frequency of the frequency band of the control unit, or the first indication information includes a center frequency and a bandwidth of the frequency band of the control unit.

According to a third aspect, this application provides a relay configuration method, where the method is applied to a communications system, where the communications system includes a relay and a network device. The method includes: generating, by the network device, first indication information, where the first indication information is used to determine a frequency band of a forwarding unit of the relay; and sending, by the network device, the first indication information to the relay. Correspondingly, the relay receives the first indication information, and forwards a signal on the frequency band of the forwarding unit.

In the foregoing technical solution, the network device may send, to the relay, the first indication information used to determine the frequency band of the forwarding unit, so that the relay determines the frequency band of the forwarding unit based on the first indication information, and then forwards a signal on the frequency band, thereby improving flexibility

of resource configuration, for example, facilitating flexible configuration of an operating frequency band of the forwarding unit of the relay.

According to a fourth aspect, this application provides a communications apparatus, which can implement the method according to any one of the first aspect or the possible implementations of the first aspect, or implement the method according to any one of the second aspect or the possible implementations of the second aspect. The apparatus includes corresponding modules configured to perform the foregoing method. The modules included in the apparatus may be implemented by software and/or hardware.

According to a fifth aspect, this application provides a communications apparatus, where the apparatus includes a processor, and the processor may be configured to execute a computer program in a memory, to implement the method according to any one of the first aspect or the possible implementations of the first aspect, or implement the method according to any one of the second aspect or the possible implementations of the second aspect.

Optionally, the apparatus further includes a communication interface, and the processor is coupled to the communication interface. The communication interface is configured to receive a signal from another communications apparatus outside the apparatus and transmit the signal to the processor, or send a signal from the processor to another communications apparatus outside the apparatus. For example, the communication interface may be a transceiver, a circuit, a bus, a module, a pin, or a communication interface of another type.

Optionally, the apparatus further includes a memory, and the processor is coupled to the memory. The memory is configured to store program instructions and data. The memory is coupled to the processor, and when the processor executes the instructions stored in the memory, the method according to any one of the foregoing aspects may be implemented.

According to a sixth aspect, this application provides a communications apparatus, including a processor and a communications interface, where the communications interface is configured to receive a signal from another communications apparatus other than the communications apparatus and transmit the signal to the processor, or send a signal from the processor to another communications apparatus other than the communications apparatus; and the processor implements the relay configuration method according to any one of the first aspect or the possible implementations of the first aspect by using a logic circuit or executing code instructions, or implements the relay configuration method according to any one of the second aspect or the possible implementations of the second aspect. For example, the communications interface may be a transceiver, a circuit, a bus, a module, a pin, or a communication interface of another type.

Optionally, the apparatus further includes a memory, configured to store instructions and data. The memory may be coupled to the processor, and when the processor executes the instructions stored in the memory, the relay configuration method according to any one of the first aspect or the possible implementations of the first aspect is implemented, or the relay configuration method according to any one of the second aspect or the possible implementations of the second aspect is implemented.

According to a seventh aspect, this application provides a communications apparatus, including a processor and a memory. The memory is configured to store instructions and data. When executing the instructions stored in the memory, the processor may implement the relay configuration method according to any one of the first aspect or the possible implementations of the first aspect, or implement the relay configuration method according to any one of the second aspect or the possible implementations of the second aspect.

Optionally, the apparatus further includes a communication interface, where the communication interface is configured to enable the apparatus to communicate with another communication apparatus. For example, the communication interface may be a transceiver, a circuit, a bus, a module, a pin, or a communication interface of another type.

According to an eighth aspect, this application provides a computer-readable storage medium, where the computer-readable storage medium stores a computer program or instructions, and when the computer program or the instructions is executed, the method according to any one of the first aspect or the possible implementations of the first aspect is implemented, or the method according to any one of the second aspect or the possible implementations of the second aspect is implemented.

According to a ninth aspect, this application provides a computer program product, where the computer program product includes an instruction, and when the instruction is run, the method according to any one of the first aspect or the possible implementations of the first aspect is implemented, or the method according to any one of the second aspect or the possible implementations of the second aspect is implemented.

According to a tenth aspect, this application provides a chip system, where the chip system includes at least one processor, configured to support implementation of the function in any one of the first aspect or the possible implementations of the first aspect, or configured to support implementation of the function in any one of the second aspect or the possible implementations of the second aspect, for example, receiving or processing the data involved in the foregoing method.

In a possible design, the chip system further includes a memory, where the memory is configured to store program instructions and data, and the memory is inside or outside the processor.

The chip system may include a chip, or may include the chip and another discrete component.

According to an eleventh aspect, this application provides a communication system, where the communication system includes a relay and a network device. The relay is configured to implement the method according to the first aspect and any one of the possible implementations of the first aspect, and the network device is configured to implement the method according to the second aspect and any one of the possible implementations of the second aspect.

It should be understood that the third aspect to the eleventh aspect of this application correspond to the technical solutions of the first aspect and the second aspect of this application, and beneficial effects achieved by the aspects and the corresponding feasible implementations are similar, and details are not described again.

## Description of the Drawings

FIG. 1 is a schematic diagram of signal forwarding by a relay according to an embodiment of this application;
FIG. 2 is a schematic diagram of a base station controlling a relay to forward a signal according to an embodiment of this application;
FIG. 3 is a schematic diagram of a MAC CE format according to an embodiment of this application;
FIG. 4 is another schematic diagram of a MAC CE format according to an embodiment of this application;
FIG. 5 is a schematic flowchart of a relay configuration method according to an embodiment of this application;
FIG. 6 is a schematic diagram of a control unit and a forwarding unit working in different frequency bands according to an embodiment of this application;
FIG. 7 is a schematic diagram of a plurality of adjacent frequency bands according to an embodiment of this application;
FIG. 8 is yet another schematic diagram of a MAC CE format according to an embodiment of this application;
FIG. 9 is still another schematic diagram of a MAC CE format according to an embodiment of this application;
FIG. 10 is a schematic diagram of an index of a frequency band of a forwarding unit and a corresponding frequency band according to an embodiment of this application;
FIG. 11 is a schematic diagram of a format of a MAC CE used to activate an index of a frequency band of a forwarding unit according to an embodiment of this application;
FIG. 12 is still another schematic diagram of a format of a MAC CE used to activate an index of a frequency band of a forwarding unit according to an embodiment of this application;
FIG. 13 is another schematic diagram of a format of a MAC CE used to indicate an index of a frequency band for activating a forwarding unit according to an embodiment of this application;
FIG. 14 is a schematic diagram of a frequency band indicator field in DCI according to an embodiment of this application;
FIG. 15 is another schematic diagram of a frequency band indicator field in DCI according to an embodiment of this application;
FIG. 16 is a schematic block diagram of a communications apparatus according to an embodiment of this application;
FIG. 17 is another schematic block diagram of a communications apparatus according to an embodiment of this application;
FIG. 18 is still another schematic structural diagram of a communication apparatus according to an embodiment of this application;
FIG. 19 is still another schematic structural diagram of a communication apparatus according to an embodiment of this application;
FIG. 20 is a schematic structural diagram of a relay according to an embodiment of this application.

## Specific Implementation

The following describes the technical solutions in this application with reference to the accompanying drawings.

To facilitate understanding of the technical solutions provided in this application, the following points are first described:

First, in this application, the terms "include" and "have" and any other variants thereof are intended to cover non-exclusive inclusion. For example, an apparatus, a system, a product, or a device that includes a series of modules, units, or units is not necessarily limited to those modules, units, or units that are explicitly listed, but may include other modules, units, or units that are not explicitly listed or that are inherent to these apparatuses, systems, products, or devices.

Second, in this application, indication includes an explicit indication (also referred to as a direct indication) and an implicit indication (also referred to as an indirect indication). The explicit indication of the information A means that the

information A is included; and the implicit indication of the information A means that the information A is indicated by using a correspondence between the information A and the information B and by directly indicating the information B. The correspondence between the information A and the information B may be predefined, pre-stored, pre-burned, or preconfigured. Alternatively, the information A may be indicated by using the information B and a preset rule.
Third, in this application, that information C is used for determining information D includes both a case where information D is determined based only on information C, and a case where information D is determined based on information C and other information. In addition, that information C is used for determining information D may also include an indirect determination case, for example, a case where information D is determined based on information E, and information E is determined based on information C.
Fourth, in this application, "at least one" means one or more,"a plurality of"means two or more. The term "and/or, "describes an association relationship between associated objects, and indicates that three relationships may exist. For example, A and/or B may indicate the following three cases: only A exists, both A **and** B exist, or only B exists, where A and B may be singular or plural. The character"/" generally indicates an "or" relationship between the associated objects, but does not preclude the possibility that the associated objects may have an "and" relationship. The specific meaning may be understood in combination with the context. "At least one of the following" or a similar expression thereof refers to any combination of these items, including any combination of a single item or a plurality of items. For example, "at least one of a, b, or c" may indicate: a, b, c; a and b; a and c; band c; or a, b, and c, where a, b, and c may be singular or multiple.
Fifth, in this application, the use of prefixes such as "first" and "second" is merely intended to facilitate distinguishing and describing different things that belong to the same name category, and does not impose any limitation on an order, size, or quantity of the things. For example, "first configuration information" and "second configuration information" are merely different configuration information, and there is no time sequence relationship, size relationship, or priority relationship between them.
Sixth, in this application, "sending" and "receiving" indicate a direction of signal transmission. For example, "sending information to a network device" may be understood as that an intended destination of the information is the network device, and may include directly sending the information through an air interface, or may include indirectly sending the information through an air interface by another unit or module. "Receiving information from a relay" may be understood as that a source of the information is the relay, and may include directly receiving the information from the relay through an air interface, or may include indirectly receiving the information from the relay through an air interface from another unit or module. "Sending" may also be understood as "output" of a chip interface, and "receiving" may also be understood as "input" of a chip interface.

In other words, sending and receiving may be performed between devices, for example, between a network device and a relay, or may be performed within a device, for example, between components, between modules, between chips, or between software or hardware modules within the device by using a bus, a wire, or an interface.

Seventh, in this application, "when" and "if" mean that an apparatus performs corresponding processing under an objective condition, and do not limit time, and do not require that an apparatus necessarily perform a determining action when implementing these, nor does it mean that there are other limitations.

Eighth, terms such as "example", "for example", "for instance", or "such as" used in this application are used to indicate an example, an illustration, or a description. Any embodiment or design scheme described as "an example", "for example", "for instance", or "such as" in this application should not be construed as being more preferred or having more advantages than another embodiment or design scheme. To be precise, the use of the terms such as "example", "for example", "for instance", or "such as" is intended to present a related concept in a specific manner.

9th, in this application, preconfiguration may be understood as presetting, predefining, defining, predefining, storing, pre-storing, pre-negotiating, pre-forming, or pre-setting, or the like.

10th, the technical solutions provided in this application may be applied to various communications systems, for example, a long term evolution (long term evolution, LTE) system, an LTE frequency division duplex (frequency division duplex, FDD) system, an LTE time division duplex (time division duplex, TDD) system, a sidelink (sidelink, SL) communications system, a universal mobile telecommunication system (universal mobile telecommunication system, UMTS), a worldwide interoperability for microwave access (worldwide interoperability for microwave access, WiMAX) communications system, a 5th generation (5th generation, 5G) mobile communications system, or a new radio access technology (new radio access technology, NR) system. The 5G mobile communications system may include a non-standalone (non-standalone, NSA) network and/or a standalone (standalone, SA) network. The technical solutions provided in this application may also be applied to future communications systems, such as a 6th generation (6th generation, 6G) mobile communications system. This is not limited in this application.

11th, in this application, the network device may also be referred to as a radio access network (RAN) device or an access network device. The access network may be a cellular system related to the 3rd Generation Partnership Project (3GPP), for example, a 4G or 5G mobile communication system, or a future-oriented evolved system (such as a 6G mobile

communication system). The access network may also be an open access network (open RAN, O-RAN, or ORAN), a cloud radio access network (cloud radio access network, CRAN), a wireless fidelity (wireless fidelity, Wi-Fi) system, or the like. This is not limited in this application.

In a possible scenario, the RAN device may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6G mobile communication system, a base station in a future mobile communication system, an access node in a Wi-Fi system, or the like. The RAN device may be a macro base station, a micro base station, an indoor station, or a radio controller in a CRAN scenario. Optionally, the RAN device may alternatively be a server, a wearable device, a vehicle, an in-vehicle device, or the like. For example, the access network device in the vehicle to everything (vehicle to everything, V2X) technology may be a road side unit (road side unit, RSU).

In another possible scenario, multiple RAN devices collaboratively assist a terminal in achieving wireless access, where different RAN devices respectively implement some functions of a base station. For example, the RAN device may be a central unit (CU), a distributed unit (DU), a CU-control plane (control plane, CP), a CU-user plane (user plane, UP), a radio unit (RU), or the like. The CU and DU may be separately disposed, or may also be included in the same network element, for example, in a baseband unit (BBU). The RU may be included in a radio frequency device or a radio frequency unit, for example, included in a remote radio unit (RRU), an active antenna unit (AAU), or a remote radio head (RRH).

In different systems, the CU (or the CU-CP and the CU-UP), the DU, or the RU may also have different names, but a person skilled in the art may understand their meanings. For example, in an ORAN system, the CU may also be referred to as an open CU (open-CU, O-CU), the DU may also be referred to as an open DU (open-DU, O-DU), the CU-CP may also be referred to as an open CU-CP (open-CU-CP, O-CU-CP), the CU-UP may also be referred to as an open CU-UP (open-CU-UP, O-CU-UP), and the RU may also be referred to as an open RU (open-RU, O-RU). For ease of description, this application uses the CU, the CU-CP, the CU-UP, the DU, and the RU as examples for description. Any one of the units of the CU (or the CU-CP, the CU-UP), the DU, and the RU in this application may be implemented by using a software module, a hardware module, or a combination of a software module and a hardware module.

To better understand the method provided in this application, the following provides brief descriptions of terms used in this application.

1. Relay: may also be referred to as a relay device. Considering a control capability of a network side on the relay, relays may be classified into network-controlled relays and non-network-controlled relays. A relay has a function of signal forwarding (or reflection). A typical relay has two antenna panels, one of which is used to communicate with a network device (referred to as a backhaul side), and the other is used to communicate with a terminal (referred to as an access side). Generally, only one antenna panel is used to receive a signal, and the received signal is amplified and then forwarded (or sent) by the other antenna panel.

The relay mainly includes an MT unit (which may also be referred to as a control unit) and a forwarding unit. The control unit is configured to exchange messages with the network device. For example, beam control, amplification factor (or output power) control, uplink forwarding direction control, downlink signal forwarding direction control, and on/off control are all interactions between the control unit and the network device. The forwarding unit is configured to forward a signal. For example, the forwarding unit does not need to demodulate the signal, and may directly amplify and forward the signal.

One form of relay can be an amplify-and-forward (AF) relay. An AF relay performs simple radio frequency processing (such as amplification, demodulation, frequency shifting, noise reduction, etc.) on the signal before forwarding it. AF relays typically have multiple antenna panels, where some antenna panels are used for receiving signals, and others are used for forwarding (or transmitting) signals. Each antenna panel can consist of multiple antennas, and a beam can be formed on an individual antenna panel to achieve better relay transmission performance.

Considering the beam capability on the access side, it can be further divided into single-beam forwarding and multi-beam forwarding. Among these, if a relay has the capability of multiple beams on the access side, the relay needs to align the beams on the access side with the terminal when forwarding signals to achieve better transmission performance. Considering the networking architecture, it can be further categorized into single-hop forwarding and multi-hop forwarding.

The amplification and forwarding relay circuit can introduce noise to the forwarded signal, and when the relay noise is transmitted to the receiving end, it can cause noise interference at the receiver. If the relay amplifies the signal excessively, on one hand, this can result in a higher output power of the forwarded signal, potentially causing interference; on the other hand, it may lead the relay power amplifier to enter the saturation region, causing distortion of the forwarded signal and preventing the receiver from correctly demodulating the signal. Currently, the primary approach to managing interference is to control the relay's amplification and forwarding functions, which involves configuring the relay's amplification gain (or output power) and implementing on/off management (also known as on-off control, which means controlling whether the relay enables or disables the amplification and forwarding function).

Another form of relay is a reflective relay. A reflective relay generally uses a special reflective or transmissive antenna to directly reflect or transmit signals (with some signal attenuation during reflection or transmission). A reflective relay can generally be considered as a single antenna panel, where each antenna element both receives signals and reflects (or transmits) signals.

It should be noted that, in this application, amplify-and-forward, reflect-and-forward, and transmit-and-forward may be collectively referred to as "forwarding."

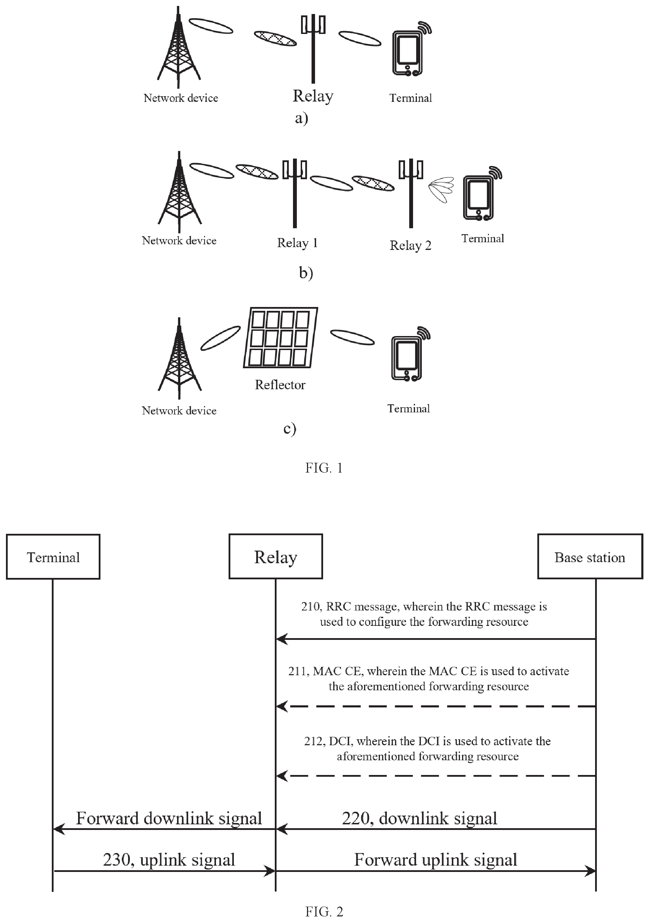

The following will describe in detail a process of forwarding signals by relays in different forms with reference to FIG. 1.

FIG. 1 is a schematic diagram of signal forwarding by a relay according to an embodiment of this application. In FIG. 1, (a) shows a single-hop forwarding process, (b) shows a multi-hop forwarding process, and (c) shows a process of communication between a network device and a terminal assisted by a reflective surface.

As shown in (a) in FIG. 1, there is a relay between the network device and the terminal, and communication between the network device and the terminal is assisted through this relay, which may be referred to as single-hop forwarding. The relay may directly amplify the received signal and then forward it. For example, the relay may receive a signal from the network device, amplify the signal, and forward the amplified signal to the terminal, thereby ensuring normal communication between the network device and the terminal. For another example, the relay may receive a signal from the terminal, amplify the signal, and forward the amplified signal to the network device, thereby ensuring communication between the network device and the terminal.

As shown in (b) in FIG. 1, there are a plurality of relays (two relays are used as an example in the figure) between the network device and the terminal, and the two relays assist in communication between the network device and the terminal. For example, relay 1 may receive a signal from the network device, amplify the signal, and forward the amplified signal to relay 2. Relay 2 may receive the signal from relay 1, amplify the signal, and forward the amplified signal to the terminal. For another example, relay 2 may receive a signal from the terminal, amplify the signal, and forward the amplified signal to relay 1, and relay 1 may receive the signal from relay 2, amplify the signal, and forward the amplified signal to the network device. The foregoing process may be referred to as multi-hop forwarding.

Optionally, the access side of the relay may have a capability of one or more beams. For example, the access side of the relay in (a) in FIG. 1 has a capability of one beam. For another example, the access side of relay 2 in (b) in FIG. 1 has a capability of multiple beams. In this case, when forwarding a signal, relay 2 needs to align a beam on the access side with the terminal.

As shown in (c) in FIG. 1, the reflective relay reflects a signal directly through a reflector to assist communication between a network device and a terminal. For example, the reflective relay may reflect a signal from the network device to the terminal through the reflector. For another example, the reflective relay may reflect a signal from the terminal to the network device through the reflector.

2. Amplification gain: may correspond to power control. For example, if the received signal received power is $P_R$ (unit: decibel millimeter (dBm)) and the amplification gain is G (unit: decibel (dB)), then the output power (that is, the transmit power) is $P_T=G+P_R$ (unit: dBm). In a communications system involving a reflector, the amplification gain may correspond to a reflection loss.

3. Switching control: also referred to as switch management or switch control (ON-OFF control), which is controlling the relay to turn on or off amplified forwarding. Switching control may be divided into uplink switching control, downlink switching control, forwarding on, and forwarding off.

4. Relay resource: Used to configure the transmission attributes in the process of relaying and forwarding signals, for example, including at least one of the following parameters: time resource, access link beam, backhaul link beam, amplification gain, or a reflection configuration matrix (for a reflector). One relay resource corresponds to an index of the relay resource (or referred to as a relay resource index), which is used to identify the relay resource.

5. Relay resource set: One relay resource set includes one or more relay resources. That is, one relay resource set corresponds to one or more parameter lists (or patterns). Each relay resource includes at least one of the following parameters: time resource, access link beam, backhaul link beam, amplification gain, or a reflection configuration matrix (for a reflector). One relay resource set corresponds to an index of the relay resource set (or referred to as a relay resource set index), which is used to identify the relay resource set.

For example, one relay resource set corresponds to multiple relay resource indexes, that is, one relay resource set includes multiple relay resources, and each relay resource corresponds to one relay resource index. In another example, one relay resource set corresponds to multiple time resources, that is, one relay resource set includes multiple time resources. In another example, one relay resource set corresponds to multiple time resource lists (or patterns), and each time resource list corresponds to multiple time resources, that is, one relay resource set includes multiple time resource lists, and each time resource list includes multiple time resources. In another example, one relay resource set corresponds to multiple access link beams, that is, one relay resource set includes multiple access link beams. In another example, one relay resource set corresponds to multiple access link beam lists (or patterns), and each access link beam list corresponds to multiple access link beams, that is, one relay resource set includes multiple access link beam lists, and

each access link beam list includes multiple access link beams.

It should be noted that the forwarding resource may be referred to as a resource for short, and the set of forwarding resources may be referred to as a resource set for short.

6. Component Carrier (CC): Each carrier involved in carrier aggregation is referred to as a CC. Among all component carriers, the component carrier that carries signaling transmission and manages other component carriers is called the primary component carrier (PCC). The cell corresponding to the primary component carrier is referred to as the primary cell (Pcell), while the other component carriers are called secondary component carriers (SCC), and the cells corresponding to the secondary component carriers are referred to as secondary cells (Scell).

7. OAM: Based on the actual needs of network operations, operators typically divide network management tasks into three major categories: Operation, Administration, and Maintenance, collectively referred to as OAM. Operation primarily involves the analysis, forecasting, planning, and configuration of daily network and service activities. Maintenance mainly includes routine operational activities such as testing and fault management of the network and its services. OAM can monitor the network's operational status, optimize network connections and performance, enhance network operational stability, and reduce network maintenance costs.

8. Periodic resources, semi-persistent (SP) resources, and aperiodic resources: Periodic resources (which may also be referred to as semi-static resources) are resources that occur periodically after being configured through higher layer signaling (such as RRC) or by default, meaning they take effect periodically.

Semi-persistent resources are configured through higher layer signaling, and their initial state after configuration is inactive (or unavailable). These resources need to be activated before being used, and once activated, they can take effect periodically. When they are no longer needed, they can be deactivated. For example, activation/deactivation may be performed through a MAC CE and/or DCI. It should be understood that the following description uses activation through a MAC CE as an example for illustration. In addition, deactivation through a MAC CE is similar to activation through a MAC CE, and the following uses activation through a MAC CE as an example for illustration.

Aperiodic resources are configured through higher layer signaling, and each time they are used, signaling (or an indication) is required to activate them. Once activated, they take effect only once. For example, activation may be performed through DCI.

In this application, forwarding resources can be classified into periodic forwarding resources, semi-persistent forwarding resources, and aperiodic forwarding resources. Among them, periodic forwarding resources may be configured through higher layer signaling; semi-persistent forwarding resources may be configured through higher layer signaling and activated/deactivated through a MAC CE and/or DCI; aperiodic forwarding resources may be configured through higher layer signaling and activated through DCI.

FIG. 2 is a schematic diagram of a base station controlling a relay to forward a signal according to an embodiment of this application. The process of the base station controlling the relay to forward the signal will be described in detail with reference to FIG. 2. Herein, the base station is an example of a network device, and should not be construed as imposing any limitation on this application.

In step 210, the base station sends an RRC message to the relay, where the RRC message is used to configure a forwarding resource.

The forwarding resource, for example, includes at least one of the following parameters: signal forwarding direction, signal forwarding time (e.g., timeslot, orthogonal frequency division multiplexing (OFDM) symbol), access link beam for forwarding the signal, backhaul link beam for forwarding the signal, signal amplification gain (or signal forwarding power), forwarding signal type, or forwarding signal priority.

Optionally, the type of the foregoing forwarding resource may be periodic, semi-persistent, or aperiodic. When the forwarding resource is a periodic forwarding resource, the foregoing forwarding resource takes effect periodically; when the forwarding resource is a semi-persistent forwarding resource, the base station performs step 211; and when the forwarding resource is an aperiodic forwarding resource, the base station performs step 212.

In step 211, the base station sends a MAC CE to the relay, where the MAC CE is used to activate the foregoing forwarding resource. Correspondingly, the relay receives the foregoing MAC CE.

For example, the MAC CE is used to activate the access-side beam corresponding to the foregoing forwarding resource.

In step 212, the base station sends DCI to the relay, where the DCI is used to activate the foregoing forwarding resource. Correspondingly, the relay receives the foregoing DCI.

For example, the DCI is used to activate the access-side beam corresponding to the foregoing forwarding resource.

In step 220, the base station sends a downlink signal, and the relay forwards the downlink signal.

The base station sends a downlink signal, the relay receives the downlink signal from the base station, and forwards the downlink signal based on the configured forwarding resource, or in other words, forwards the downlink signal on the configured forwarding resource.

In step 230, the terminal transmits an uplink signal, and the relay forwards the uplink signal.

The terminal sends an uplink signal, the relay receives the uplink signal from the terminal, and forwards the uplink signal based on the configured forwarding resource, or in other words, forwards the uplink signal on the configured forwarding resource.

The signaling for configuring the forwarding resource will be described in detail below with reference to Table 1 to Table 3. Table 1 illustrates a possible form of the configuration of periodic forwarding resources as defined in the standard.

Table 1

```
NCR-PeriodicFwdResourceSet-r18::= SEQUENCE { (The relay periodic forwarding resource set is configured through the following parameters)
    periodicFwdRsrcSetId-r18 (Identifier of the periodic forwarding resource set) NCR-PeriodicFwdResourceSetId-r18,
    periodicFwdRsrcToAddModList-r18 (List of periodic forwarding resources to be added) SEQUENCE (SIZE (1..maxNrofPeriodicFwdResource-r18)) OF NCR-PeriodicFwdResource-r18
    OPTIONAL, (Optional) -- Need N (Not needed)
    periodicFwdRsrcToReleaseList-r18 (Periodic forward resource release list) SEQUENCE (SIZE (1..maxNrofPeriodicFwdResource-r18)) OF NCR-PeriodicFwdResourceId-r18
    OPTIONAL, -- Need N
    referenceSCS-r18 (Reference subcarrier spacing) SubcarrierSpacing
    OPTIONAL, -- Need M (maintain/preserve required)
priorityFlag-r18 (Priority Flag) ENUMERATED {true}
OPTIONAL, -- Need R (release required)
    ...
    }

NCR-PeriodicFwdResource-r18::= SEQUENCE { (The relay periodic forwarding resource is configured through the following parameters)
    periodicFwdRsrcId-r18 (Identifier of the periodic forwarding resource set) NCR-PeriodicFwdResourceId-r18,
    beamIndex-r18 (Beam index) INTEGER (0..63),
    periodicTimeRsrc-r18 (Periodic time resource) SEQUENCE {
    periodicityAndOffset-r18 NCR-PeriodicityAndOffset-r18,
    symbolOffset-r18 INTEGER (0..maxNrofSymbols-1),
    durationInSymbols-r18 INTEGER (1..112)
    }
    }

    NCR-PeriodicFwdResourceId-r18 ::= INTEGER (0..maxNrofPeriodicFwdResource-1-r18)
```

Here,"SEQUENCE"indicates that the data type is a sequence,"INTEGER"indicates that the data type is an integer variable. "Need N", "Need M", and "Need R" are used in the context of optional fields, and for specific descriptions, please refer to the relevant provisions in the 3GPP technical specification (TS) 38.331, which will not be detailed here.

As can be seen from Table 1, for periodic forwarding resources, the relay access side beam is configured sequentially from "NCR-PeriodicFwdResourceSet-r18 → NCR-PeriodicFwdResource-r18 → beamIndex-r18", where the relay performs periodic forwarding for each forwarding resource at the corresponding time according to "periodicTimeRsrc-r18".

Table 2 illustrates a possible form of the configuration of semi-persistent forwarding resources in the standard.

Table 2

```
NCR-SemiPersistentFwdResourceSet-r18::= SEQUENCE { // (The relay-semi-persistent forwarding resource set is configured through the following parameters)
semiPersistentFwdRsrcSetId-r18 (Identifier of the semi-persistent forwarding resource set) NCR-SemiPersistentFwdResourceSetId-r18,
semiPersistentFwdRsrcToAddModList-r18 (Semi-Persistent Forwarding Resource Addition List) SEQUENCE (SIZE (1..maxNrofSemiPersistentFwdResource-r18)) OF NCR-SemiPersistentFwdResource-r18
OPTIONAL, -- Need N
semiPersistentFwdRsrcToReleaseList-r18 (Semi-Persistent Forwarding Resource Release List) SEQUENCE (SIZE (1..maxNrofSemiPersistentFwdResource-r18)) OF NCR-
```

```
SemiPersistentFwdResourceId-r18
OPTIONAL, -- Need N (not needed)
referenceSCS-r18 (reference subcarrier spacing) SubcarrierSpacing
OPTIONAL, -- Need M (maintain needed)
priorityFlag-r18 (priority flag) ENUMERATED {true}
OPTIONAL, -- Need R (release needed)
...
}

NCR-SemiPersistentFwdResource-r18::= SEQUENCE { (Semi-persistent forwarding resource for relay is configured through the following parameters)
semiPersistentFwdRsrcId-r18 (Identifier of the semi-persistent forwarding resource set) NCR-SemiPersistentFwdResourceId-r18,
beamIndex-r18 (Beam index) INTEGER (0..63),
semiPersistentTimeRsrc-r18 (semi-persistent time resource) SEQUENCE {
periodicityAndOffset-r18 NCR-PeriodicityAndOffset-r18,
symbolOffset-r18 INTEGER (0..maxNrofSymbols-1),
durationInSymbols-r18 INTEGER (1..112)
}
}

    NCR-SemiPersistentFwdResourceId-r18 ::= INTEGER
(0..maxNrofSemiPersistentFwdResource-1-r18)
```

As can be seen from Table 2, for semi-persistent forwarding resources, the relay access-side beam is configured sequentially by an RRC message according to the order "NCR-SemiPersistentFwdResourceSet-r18 → NCR-SemiPersistentFwdResource-r18 → beamIndex-r18". In addition, the network device needs to activate/deactivate the forwarding resource set through a MAC CE, and can dynamically refresh the beam configured in the RRC message.

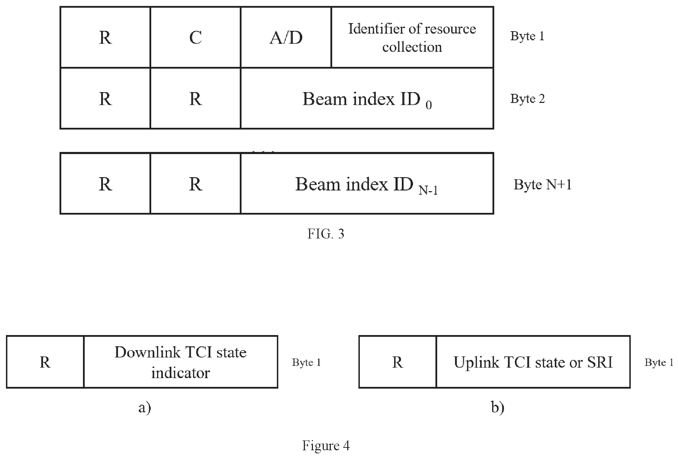

FIG. 3 is a schematic diagram of a MAC CE format according to an embodiment of this application.

As shown in FIG. 3, the resource set identifier (resource set ID) may be, for example, an index of a semi-persistent forwarding resource set; the A/D field is used to indicate whether the MAC CE is used for activating a beam in the forwarding resource set, for example, a value of the A/D field being 1 indicates that the MAC CE is used for activating a beam in the forwarding resource set, and a value of the A/D field being 0 indicates that the MAC CE is used for deactivating a beam in the forwarding resource set; the C field is used to indicate whether a beam index field exists, for example, a value of the C field being 1 indicates that the beam index field exists; bytes 2 to byte N+1 are used to indicate indexes of beams corresponding to each forwarding resource in the forwarding resource set, where the first forwarding resource in the forwarding resource set corresponds to beam index ID $_0$, the second forwarding resource in the forwarding resource set corresponds to beam index ID $_1$, and the Nth forwarding resource in the forwarding resource set corresponds to beam index ID $_{N-1}$. Herein, N is a quantity of forwarding resources in the forwarding resource set, and N is an integer greater than or equal to 1.

Table 3 shows a possible form of the configuration of aperiodic forwarding resources in the standard.

Table 3

```
NCR-AperiodicFwdConfig-r18::= SEQUENCE { (repetition-AperiodicFwdConfig) (relay-aperiodic forwarding configuration)
aperiodicFwdTimeRsrcToAddModList-r18 (aperiodic forwarding time resource addition list)
SEQUENCE (SIZE (1..maxNrofAperiodicFwdTimeResource-r18)) OF NCR-AperiodicFwdTimeResource-r18
OPTIONAL, -- Need N (not needed)
aperiodicFwdTimeRsrcToReleaseList-r18 (Aperiodic forward time resource release list)
SEQUENCE (SIZE (1..maxNrofAperiodicFwdTimeResource-r18)) OF NCR-AperiodicFwdTimeResourceId-r18
```

```
OPTIONAL, -- Need N
referenceSCS-r18 (Reference subcarrier spacing) SubcarrierSpacing
OPTIONAL, -- Need M (maintenance required)
aperiodicBeamFieldWidth-r18 (aperiodic beam field width) INTEGER (1..6)
OPTIONAL, -- Need M
numberOfFields-r18 INTEGER (1..32)
OPTIONAL, -- Need M
...
}
NCR-AperiodicFwdTimeResource-r18::= SEQUENCE { (relay-aperiodic forwarding time resource configuration)
  aperiodicFwdTimeRsrcId-r18 (identifier of the aperiodic forwarding time resource) NCR-AperiodicFwdTimeResourceId-r18,
slotOffsetAperiodic-r18 (slot offset) INTEGER (0..14),
symbolOffset-r18 (symbol offset) INTEGER (0..maxNrofSymbols-1),
durationInSymbols-r18 (duration in symbols) INTEGER (1..28)
}

NCR-AperiodicFwdTimeResourceId-r18 ::= INTEGER (0..maxNrofAperiodicFwdTimeResource-1-r18)
```

As can be seen from Table 3, for an aperiodic forwarding resource, the aperiodic forwarding time resource is configured by an RRC message according to "NCR-AperiodicFwdConfig-r18 → NCR-AperiodicFwdTimeResource-r18". In addition, the network device may activate a specific forwarding time and a beam used during the forwarding through DCI (e.g., DCI 2_8). The DCI 2_8 includes a time resource indicator field and a beam indicator field, where the time resource indicator field and the beam indicator field are in a one-to-one correspondence, and are used to indicate the forwarding time and the forwarding beam of one or more aperiodic forwarding resources configured in the RRC message.

It can be learned that the beam configuration on the relay access side can be obtained from Table 1 to Table 3. For the beam on the relay backhaul side, the protocol stipulates that the relay backhaul side and the control unit share a beam set. In other words, the relay selects a beam from the beam set corresponding to the control unit to receive an uplink signal and forward a downlink signal, and the network device activates/deactivates the beam through the MAC CE.

FIG. 4 is another schematic diagram of a MAC CE format according to an embodiment of this application.

As shown in (a) in FIG. 4, the network device indicates an activated/deactivated downlink beam by using a downlink transmission configuration indicator (transmission configuration indicator, TCI) state identifier, where there is a correspondence between a downlink TCI state and a downlink beam, and a corresponding downlink beam may be determined based on the downlink TCI state identifier. As shown in (b) in FIG. 4, the network device indicates an activated/deactivated uplink beam by using an uplink TCI state identifier, a sounding reference signal resource index (sounding reference signal resource index, SRI), or a joint TCI state identifier (Joint TCI State ID), where there is a correspondence between an uplink TCI state and an uplink beam, and a corresponding uplink beam may be determined based on the uplink TCI state identifier.

As previously mentioned, a relay mainly includes a control unit and a forwarding unit. Currently, the control unit and the forwarding unit share the same frequency band, that is, the frequency bands of the control unit and the forwarding unit are the same. For example, the frequency bands of the control unit and the forwarding unit may be preset when the relay is manufactured. However, in the future, the relay may support the control unit and the forwarding unit to operate on different frequency bands. As can be seen from Table 1 to Table 3, when configuring a forwarding resource for the relay, the network device does not configure a frequency band for the forwarding unit. Therefore, how to determine the frequency band of the forwarding unit is an urgent problem that needs to be resolved.

To resolve the foregoing problem, this application provides a relay configuration method, where a network device may send first indication information to the relay, to determine a frequency band of a forwarding unit of the relay. Correspondingly, the relay may determine the frequency band of the forwarding unit based on the first indication information.

The following will describe in detail the relay configuration method provided in this application with reference to the accompanying drawings.

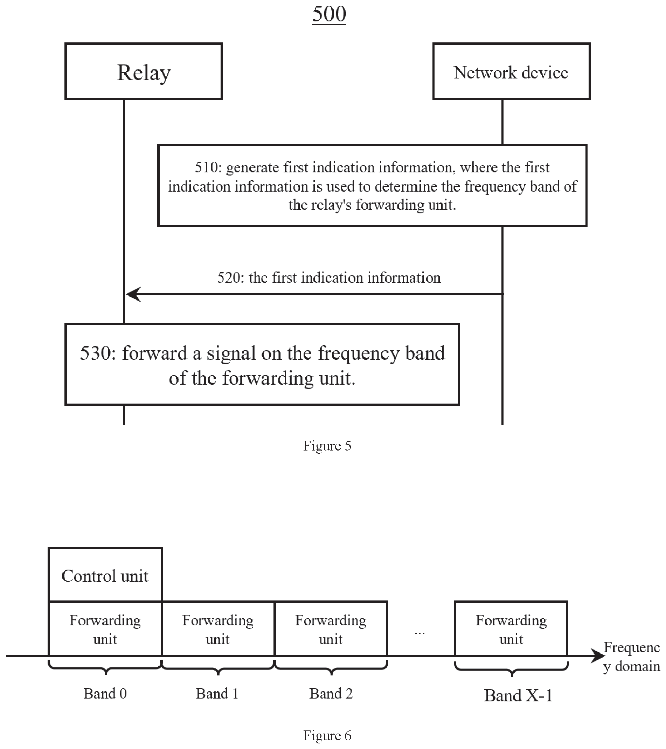

FIG. 5 is a schematic flowchart of a relay configuration method 500 according to an embodiment of this application. FIG. 5 describes the method by using interaction between a network device and a relay as an example, but should not constitute any limitation on this application. The network device in FIG. 5 may alternatively be replaced with a component (such as a chip, a chip system, or a processor) configured in the network device, or a logical module or software that can implement all or some of the functions of the network device. The relay may be replaced with a

component (such as a chip, a chip system, or a processor) configured in the relay, or a logical module or software that can implement all or some of the functions of the relay.

The method 500 shown in FIG. 5 includes steps 510 to 530. The following provides a detailed description of each step in the method 500.

Step 510: The network device generates first indication information, where the first indication information is used to determine a frequency band of a relay forwarding unit.

For example, in a RAN in which a CU, a DU, and an RU are deployed, a specific implementation of step 510 may be: the CU-CP generates the first indication information; or in an ORAN, a specific implementation of step 510 may be: the O-DU generates the first indication information.

The frequency band of the forwarding unit may also be referred to as an operating frequency band of the forwarding unit, or a frequency band used for signal forwarding. In other words, the forwarding unit operates on the frequency band. Optionally, the frequency band may be replaced with another term for indicating a frequency domain unit, such as a frequency band or a CC. This is not limited in this application.

In addition, it should be noted that, in a relay, one control unit may correspond to one or more forwarding units. In this application, an example in which a frequency band of one forwarding unit in one or more forwarding units is determined is used for description.

In step 520, the network device sends the first indication information. Correspondingly, the relay receives the first indication information.

For example, in a RAN in which a CU, a DU, and an RU are deployed, a specific implementation of step 520 may be: the CU-CP sends the generated first indication information to the relay through the DU and the RU; or in an ORAN, a specific implementation of step 520 may be: the O-CU-CP sends the generated first indication information to the relay through the O-DU and the O-RU.

After generating the first indication information, the network device sends the first indication information to the relay. Correspondingly, the relay receives the first indication information, to determine a frequency band of the forwarding unit.

Optionally, before the first indication information is received, the method 500 further includes: sending, by the relay, capability information to the network device, where the capability information is used to indicate one or more of the following: whether the relay supports the control unit and the forwarding unit to work on different frequency bands, whether the forwarding unit of the relay supports working on a plurality of adjacent frequency bands, a set of frequency bands supported by the forwarding unit, or a quantity of frequency bands included in each frequency band set.

Whether the relay supports the control unit and the forwarding unit to work on different frequency bands may be understood as whether the relay supports the control unit to work on a fixed frequency band and the forwarding unit to work on another frequency band or more frequency bands.

Whether the forwarding unit of the relay supports working on multiple adjacent frequency bands may be understood as whether the forwarding unit of the relay supports working on multiple adjacent frequency bands when forwarding a signal on a same forwarding resource. The foregoing multiple adjacent frequency bands may also be referred to as flexible frequency bands.

FIG. 6 is a schematic diagram of a control unit and a forwarding unit working on different frequency bands according to an embodiment of this application.

As shown in FIG. 6, the control unit of the relay works on a frequency band 0, and the forwarding unit of the relay works on frequency bands 0 to frequency band X-1. The relay supports the control unit and the forwarding unit to work on different frequency bands, where X is an integer greater than or equal to 1.

It should be understood that the forwarding unit working on frequency bands 0 to frequency band X-1 in FIG. 6 is merely an example, and should not constitute any limitation on this application. For example, in an actual application, the control unit of the relay may work on a frequency band 0, and the forwarding unit may work on a frequency band 1. In this case, the control unit and the forwarding unit of the relay may also be considered as working on different frequency bands.

It should also be understood that one control unit of the relay may correspond to one or more forwarding units (or one control unit corresponds to one or more access/backhaul units), which is not limited in this application. When one control unit of the relay corresponds to one forwarding unit, the forwarding unit shown in FIG. 6 may be considered as one forwarding unit, configured to implement a forwarding function of the relay, where an operating frequency band of the forwarding unit is a frequency band 0 to a frequency band X-1.

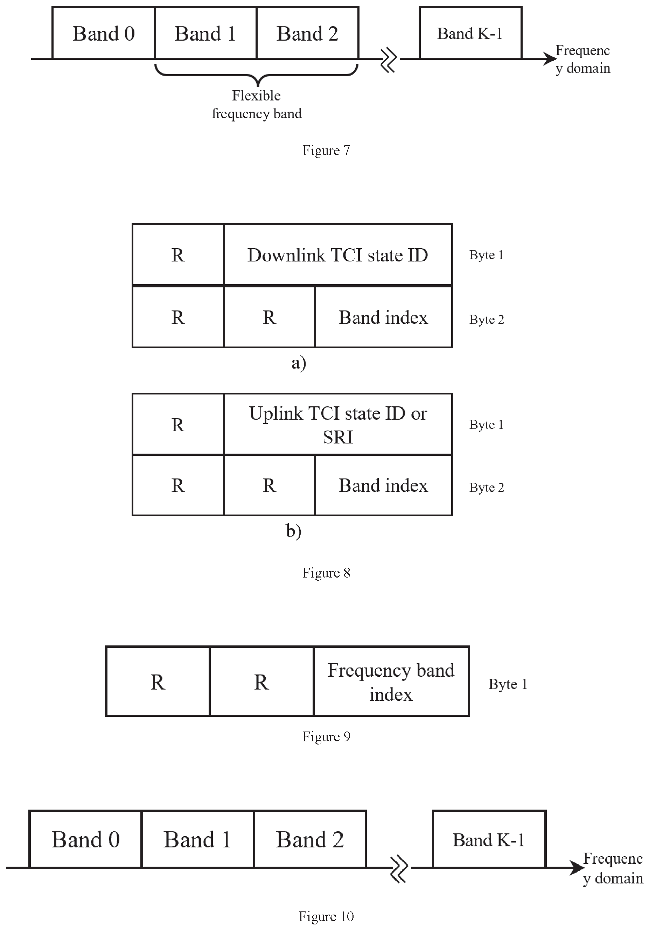

FIG. 7 is a schematic diagram of a plurality of adjacent frequency bands according to an embodiment of this application.

As shown in FIG. 7, the frequency band 1 and the frequency band 2 are adjacent, and the frequency band 1 and the frequency band 2 are for a same forwarding resource. Therefore, the frequency band 1 and the frequency band 2 may be referred to as a plurality of adjacent frequency bands (or referred to as flexible frequency bands). If the frequency band 1 and the frequency band 2 are for different forwarding resources, or the frequency band 1 and the frequency band 2 are not adjacent, the frequency band 1 and the frequency band 2 cannot be referred to as a plurality of adjacent frequency bands.

The capability information may include one or more frequency band sets supported by the forwarding unit, and each frequency band set includes one or more frequency bands. Table 4 shows a correspondence between a frequency band set and a frequency band.

Table 4

| Band set (or index of the band set) | Band (or index of the band) |
|---|---|
| A | {a0, a1, a2,...} |
| B | {b0, b1, b2,...} |
| C | {c0, c1, c2,...} |
| ... | ... |

As shown in Table 4, the frequency bands included in the frequency band set A are {a0, a1, a2,...}, the frequency bands included in the frequency band set B are {b0, b1, b2,...}, and the frequency bands included in the frequency band set C are {c0, c1, c2,...}.

The number of frequency bands included in each frequency band set may be, for example, the number of frequency bands in {a0, a1, a2,...}, the number of frequency bands in {b0, b1, b2,...}, or the number of frequency bands in {c0, c1, c2,...}. In a frequency band set, the number of frequency bands may be 1, that is, the frequency band set includes one frequency band.

After receiving the capability information of the relay from the network device, the network device may determine the frequency band of the forwarding unit of the relay based on the capability information, and then indicate the frequency band to the relay. For example, the network device may configure a frequency band supported by the relay in the frequency band set as the frequency band of the forwarding unit for the relay. For another example, when the relay supports the control unit and the forwarding unit to work in different frequency bands, the network device may send the first indication information to the relay in the manner provided in this application, to indicate the frequency band of the forwarding unit for the relay. For still another example, when the forwarding unit of the relay supports working in a plurality of adjacent frequency bands, the network device may configure a plurality of adjacent frequency bands for the forwarding unit.

The following will provide a detailed explanation of specific content of the first indication information with reference to the accompanying drawings and the table.

Optionally, the first indication information indicates the frequency band of the forwarding unit, in other words, the network device directly indicates the frequency band of the forwarding unit to the relay.

In a possible design, the first indication information includes an index of the frequency band of the forwarding unit. One index of a frequency band corresponds to one frequency band, or in other words, the index of the frequency band and the frequency band are in a one-to-one correspondence.

For example, the network device indicates the index of the frequency band of the forwarding unit by reusing an existing MAC CE, in other words, the first indication information may be carried in the existing MAC CE. For example, the MAC CE may be an uplink MAC CE, or may be a downlink MAC CE. This is not limited in this application.

The following will describe the MAC CE format with reference to FIG. 8. FIG. 8 is still another schematic diagram of a MAC CE format according to an embodiment of this application.

As shown in (a) in FIG. 8, the MAC CE may be a downlink MAC CE, and the MAC CE includes a backhaul side beam indication of the relay, for example, the backhaul side beam of the relay may be indicated by a downlink TCI state ID. The MAC CE further includes an index of the frequency band of the forwarding unit (for example, an index of the frequency band of the forwarding unit is indicated by using byte 2). As shown in (b) in FIG. 8, the MAC CE may be an uplink MAC CE, and the MAC CE includes a backhaul side beam indication of the relay, for example, the backhaul side beam of the relay may be indicated by an uplink TCI state ID, an SRI, or a combined TCI state identifier. The MAC CE further includes an index of the frequency band of the forwarding unit (for example, an index of the frequency band of the forwarding unit is indicated by using byte 2).

It should be understood that, in this application, the index of the frequency band may be referred to as a frequency band index for short.

In another example, the network device indicates the index of the frequency band of the forwarding unit by using a predefined MAC CE, where an LCID (which may be referred to as an eLCID) in the MAC CE is used to identify the MAC CE used to indicate the frequency band of the forwarding unit. In other words, the foregoing MAC CE may be specifically used to indicate the index of the frequency band of the forwarding unit.

FIG. 9 is yet another schematic diagram of a MAC CE format according to an embodiment of this application. As shown in FIG. 9, the MAC CE includes an index of a frequency band of the relay forwarding unit, that is, the network device may indicate the frequency band of the forwarding unit by using an extended MAC CE.

Optionally, the correspondence between the index of the frequency band of the forwarding unit and the frequency band may be configured by the OAM. For example, the OAM sends first configuration information to the network device and the relay, where the first configuration information is used to configure a correspondence between one or more indexes of the forwarding unit and one or more frequency bands, and each index corresponds to one frequency band. Correspondingly, the network device receives the first configuration information from the OAM, and the relay receives the first configuration information from the OAM.

It may be understood that, in this application, each frequency band may be identified by using a frequency band ID or a frequency band index (band index), that is, the frequency band ID/frequency band index corresponds to the frequency band. The frequency band ID/frequency band index may be used to distinguish between different frequency bands.

For example, the first configuration information includes one or more indexes of the forwarding unit and a center frequency and a bandwidth of a frequency band corresponding to each index; or the first configuration information includes one or more indexes of the forwarding unit and a start frequency and an end frequency of a frequency band corresponding to each index.

FIG. 10 is a schematic diagram of an index of a frequency band of a forwarding unit and a corresponding frequency band according to an embodiment of this application.

As shown in FIG. 10, one or more indexes of the forwarding unit include 0, 1, 2,..., K-1, each index corresponds to a different frequency band, where K is an integer greater than or equal to 1.

Optionally, the first configuration information further includes a quantity of frequency bands of the forwarding unit. For example, as shown in FIG. 10, the quantity of frequency bands of the forwarding unit is K.

In this application, the first configuration information corresponding to different relays may be different. For example, the quantity of frequency bands of the forwarding unit corresponding to different relays may be different. For another example, the correspondence between an index of a frequency band and a frequency band corresponding to different relays is different. For example, for relay 1, a frequency band corresponding to frequency band 0 is 870 MHz to 880 MHz, and for relay 2, a frequency band corresponding to frequency band 0 is 880 MHz to 890 MHz. For another example, the width of each frequency band corresponding to different relays may be different. For example, for relay 1, the width of the frequency band of each forwarding unit is 10 MHz, and for relay 2, the width of the frequency band of each forwarding unit is 20 MHz. It should be understood that the first configuration information corresponding to different relays may alternatively be the same. This is not limited in this application.

It should be noted that one or more frequency bands of the forwarding unit configured by the OAM include at least one frequency band supported by the relay.

Another possible design of the first indication information indicating the frequency band of the forwarding unit is that the first indication information includes a center frequency and a bandwidth of the frequency band of the forwarding unit, or the first indication information includes a start frequency and an end frequency of the frequency band of the forwarding unit. In other words, the network device may directly indicate the start frequency and the end frequency of the frequency band of the forwarding unit, or the center frequency and the bandwidth of the frequency band to the relay.

For example, the first indication information indicates that the center frequency of the frequency band of the forwarding unit is 870 MHz, and the bandwidth of the frequency band is 10 MHz. In another example, the first indication information indicates that the start frequency of the frequency band of the forwarding unit is 870 MHz, and the end frequency is 880 MHz. It should be understood that the foregoing examples describe the forwarding unit corresponding to one frequency band, but should not constitute any limitation on this application. For example, when the forwarding unit supports a plurality of frequency bands, the first indication information may include a plurality of center frequencies and a plurality of bandwidths, or the first indication information may include a plurality of start frequencies and a plurality of end frequencies. This is not limited in this application.

As previously mentioned, forwarding resources can be classified into periodic forwarding resources, semi-persistent forwarding resources, and aperiodic forwarding resources. The following will describe in detail possible designs of the first indication information for the three types of forwarding resources respectively.

1. Periodic Forwarding Resource

The first indication information may be carried in an RRC message, where the RRC message is used to configure one or more forwarding resource sets, and each forwarding resource set includes one or more forwarding resources.

One possible design is that each forwarding resource set corresponds to one frequency band of the forwarding unit. In other words, "NCR-PeriodicFwdResourceSet-r18" corresponds to (or is bound to) an index of one frequency band, meaning that each forwarding resource in each periodic forwarding resource set corresponds to the same frequency band. In addition, the frequency band indexes corresponding to different periodic forwarding resource sets may be different or may be the same, which is not limited in this application.

Another possible design is that each forwarding resource corresponds to one frequency band of the forwarding unit. In other words, "NCR-PeriodicFwdResource-r18" corresponds to an index of one frequency band. In addition, the

frequency band indexes corresponding to different forwarding resources may be different or may be the same, which is not limited in this application. Table 5 provides a possible form of the first indication information.

Table 5

```
NCR-PeriodicFwdResource-r18::= SEQUENCE { (NCR-Periodic Forwarding Resource
Configuration)
periodicFwdRsrcId-r18 (Identifier of periodic forwarding resource) NCR-PeriodicFwdResourceId-r18,
beamIndex-r18 (Beam index) INTEGER (0..63),
bandIndex-r18 (Band index) INTEGER (0..K-1),
periodicTimeRsrc-r18 (Periodic Time Resource) SEQUENCE {
periodicityAndOffset-r18 (Periodicity and Offset) NCR-PeriodicityAndOffset-r18,
symbolOffset-r18 (Symbol Offset) INTEGER (0..maxNrofSymbols-1),
durationInSymbols-r18 (Duration in Symbols) INTEGER (1..112)
}
}

NCR-PeriodicFwdResourceId-r18 ::= INTEGER (0..maxNrofPeriodicFwdResource-1-r18)
```

As shown in Table 5, "NCR-PeriodicFwdResource-r18" corresponds to an index of a frequency band, that is, the forwarding resource corresponds to a frequency band of the forwarding unit. Herein, K is the maximum number of frequency bands supported by the relay.

Another possible design is that one or more forwarding resource sets correspond to a frequency band of the forwarding unit. In other words, "NCR-FwdConfig-r18" corresponds to an index of a frequency band, that is, all forwarding resources of the relay (including semi-persistent forwarding resources and aperiodic forwarding resources) correspond to a frequency band of a forwarding unit, or all forwarding resources correspond to the same frequency band.

Optionally, when the relay supports operating in a plurality of adjacent frequency bands, the network device may further configure information about the plurality of adjacent frequency bands (denoted as second indication information). For example, the network device may also configure information about the plurality of adjacent frequency bands through an RRC message. The following will provide several possible indication manners.

Manner 1: The second indication information includes an index of the first frequency band and a quantity M of frequency bands. For example, an index of the first frequency band=1, and M=2, that is, the plurality of adjacent frequency bands include the frequency band 1 and the frequency band 2.

Manner 2: The second indication information includes an index of the first (first) frequency band and an index of the last (last) frequency band. For example, an index of the first frequency band=1, and an index of the last frequency band=2, that is, the plurality of adjacent frequency bands include the frequency band 1 and the frequency band 2.

Manner 3: The second indication information includes an index of the first frequency band and a frequency band bandwidth gain. The frequency band bandwidth gain refers to a multiple of an increase in bandwidth of the plurality of adjacent frequency bands relative to the first frequency band. Each frequency band corresponds to one bandwidth. Bandwidths corresponding to different frequency bands may be the same or may be different. This is not limited in this application. For example, the bandwidths of the frequency band 1 and the frequency band 2 are equal, an index of the first frequency band=1, and a frequency band bandwidth gain=2, that is, the plurality of adjacent frequency bands include the frequency band 1 and the frequency band 2. Table 6 lists the content included in the second indication information in the foregoing three manners.

Table 6

| Indication manner | Second indication information |
|---|---|
| Manner 1 | Index of the first frequency band = 1, M = 2 |
| Manner 2 | Index of the first frequency band = 1, index of the last frequency band = 2 |
| Manner 3 | Index of the first frequency band = 1, frequency band bandwidth gain = 2 |

It may be understood that the network device may further indicate the information about the plurality of adjacent frequency bands to the relay based on one of the foregoing three manners.

II. Semi-persistent forwarding resource

The first indication information may be carried in an RRC message, where the RRC message is used to configure one or more forwarding resource sets, and each forwarding resource set includes one or more forwarding resources.

In a possible design, each forwarding resource set (semi-persistent forwarding resource set) corresponds to one frequency band of the forwarding unit. In other words, "NCR-SemiPersistentFwdResourceSet-r18" corresponds to (or is bound to) an index of one frequency band, that is, each forwarding resource in each semi-persistent forwarding resource set corresponds to a same frequency band. In addition, indexes of frequency bands corresponding to different semi-persistent forwarding resource sets may be different or may be the same. This is not limited in this application.

In another possible design, each forwarding resource (semi-persistent forwarding resource) corresponds to one frequency band of the forwarding unit. In other words, "NCR-SemiPersistentFwdResource-r18" corresponds to an index of one frequency band. In addition, indexes of frequency bands corresponding to different forwarding resources may be different or may be the same. This is not limited in this application. Table 7 provides a possible form of the first indication information.

Table 7

```
NCR-SemiPersistentFwdResource-r18::= SEQUENCE { (NCR-Semi-persistent forwarding resource configuration)
semiPersistentFwdRsrcId-r18 (Identifier of the semi-persistent forwarding resource) NCR-SemiPersistentFwdResourceId-r18,
beamIndex-r18 (Beam index) INTEGER (0..63),
bandIndex-r18 (Band index) INTEGER (0..K-1),
semiPersistentTimeRsrc-r18 (semi-persistent time resource) SEQUENCE {
periodicityAndOffset-r18 (periodicity and offset) NCR-PeriodicityAndOffset-r18,
symbolOffset-r18 (symbol offset) INTEGER (0..maxNrofSymbols-1),
durationInSymbols-r18 (duration in symbols) INTEGER (1..112)
}
}

NCR-SemiPersistentFwdResourceId-r18 ::= INTEGER (0..maxNrofSemiPersistentFwdResource-1-r18)
```

As shown in Table 7, "NCR-SemiPersistentFwdResource-r18" corresponds to an index of a frequency band, that is, the semi-persistent forwarding resource corresponds to a frequency band of the forwarding unit. Herein, K is the maximum number of frequency bands supported by the relay.

Another possible design is that one or more forwarding resource sets correspond to a frequency band of the forwarding unit. In other words, "NCR-FwdConfig-r18" corresponds to an index of a frequency band, that is, all forwarding resources (including periodic and aperiodic forwarding resources) of the relay correspond to a frequency band of the forwarding unit, or all forwarding resources correspond to the same frequency band.

For a semi-persistent forwarding resource, the network device may activate/deactivate a frequency band corresponding to the forwarding resource by using a MAC CE.

In a possible implementation, the network device sends a MAC CE to the relay, where the MAC CE is used to activate the frequency band of the forwarding unit.

As for the foregoing MAC CE, a possible design is that an LCID in the MAC CE is used to identify a frequency band of the forwarding unit that is activated by the MAC CE, where the LCID may be an eLCID. Alternatively, the MAC CE is an NCR access link frequency band indication MAC CE, and the NCR access link frequency band indication MAC CE is identified by a MAC subheader with an eLCID. It can be learned that the MAC CE may be an extended MAC CE, or the MAC CE is a predefined MAC CE, and is specifically used to activate the frequency band of the forwarding unit. For example, when an LCID index is 287, the MAC CE is used to activate/deactivate the frequency band of the forwarding unit.

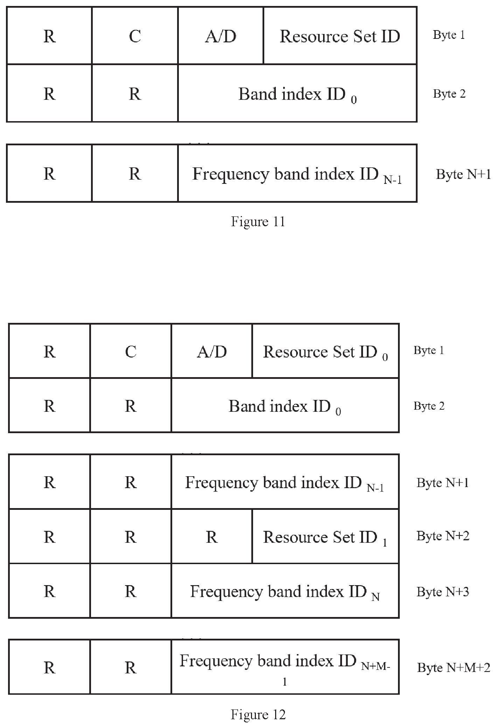

FIG. **11** is a schematic diagram of a format of a MAC CE used to indicate an index of a frequency band for activating a forwarding unit according to an embodiment of this application.

As shown in FIG. 11, the resource set ID may be, for example, an index of a semi-persistent forwarding resource set. The A/D field is used to identify whether the MAC CE is used to forward activation of a frequency band in the resource set. For example, a value of the A/D field being 1 indicates that the MAC CE is used to forward activation of a frequency band in the resource set, and a value of the A/D field being 0 indicates that the MAC CE is used to forward deactivation of a frequency band in the resource set. The C field is used to identify whether a frequency band index field exists. For example, if a value of the C field is 1, it indicates that the frequency band index field exists; if the value of the C field is 0, the beam index/frequency band index does not exist, and the C field is valid only when the A/D field is set to 1. R is a reserved bit, and

is set to 0. Bytes 2 to byte N+1 are used to indicate an index of a frequency band of a forwarding resource in the forwarding resource set. The first forwarding resource in the forwarding resource set corresponds to a frequency band index $ID_0$, the second forwarding resource in the forwarding resource set corresponds to a frequency band index $ID_1$, and the Nth forwarding resource in the forwarding resource set corresponds to a frequency band index $ID_{N-1}$.

Optionally, when the relay device supports working in a plurality of adjacent frequency bands, the network device may further configure information (denoted as second indication information) about the plurality of adjacent frequency bands.

For example, the network device may further configure information about the plurality of adjacent frequency bands by using the MAC CE shown in FIG. 11. For example, the number of the plurality of adjacent frequency bands is indicated by using the first two reserved fields in bytes 2 to byte N+1. In this case, indexes of frequency bands indicated by bytes 2 to byte N+1 may be an index of a first frequency band or an index of a last frequency band in the plurality of adjacent frequency bands. This is not limited in this application.

Optionally, the MAC CE may indicate activation/deactivation of frequency bands corresponding to a plurality of forwarding resource sets.

FIG. 12 is another schematic diagram of a format of a MAC CE used to indicate an index of a frequency band for activating a forwarding unit according to an embodiment of this application.

As shown in FIG. 12, bytes 2 to byte N+1 are used to activate/deactivate frequency bands corresponding to N forwarding resources in the semi-persistent transmission resource set $ID_0$, and bytes N+3 to byte N+M+2 are used to activate/deactivate frequency bands corresponding to M forwarding resources in the semi-persistent transmission resource set $ID_1$, where M and N are integers greater than 1.

Another possible design for activating/deactivating the frequency band corresponding to the forwarding resource by using the MAC CE is as follows: The MAC CE includes a first field and a second field, where the first field is used to activate the frequency band of the forwarding unit, and the second field is used to activate access-side beams corresponding to each forwarding resource in the set of forwarding resources. In other words, an existing MAC CE may be reused, for example, a MAC CE used to activate access-side beams corresponding to each forwarding resource in the set of forwarding resources, that is, the MAC CE may be used to activate access-side beams corresponding to each forwarding resource in the set of forwarding resources, and may also be used to activate the frequency band of the forwarding unit. For example, when the LCID index is 288, activation/deactivation of the frequency band corresponding to the relay semi-persistent transmission resource is correspondingly performed.

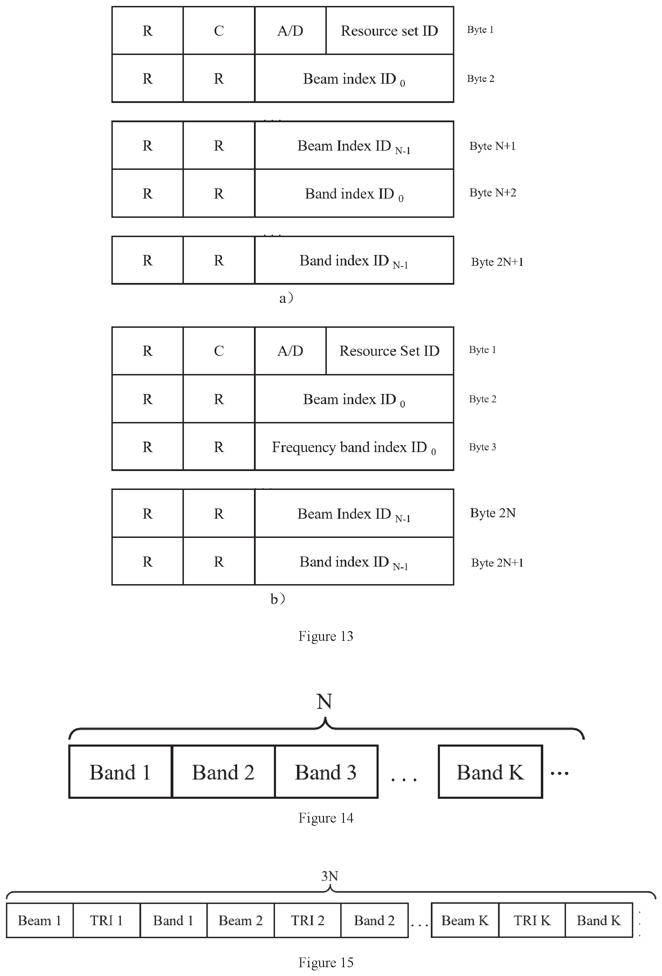

FIG. 13 is still another schematic diagram of a format of a MAC CE used to indicate an index of a frequency band for activating a forwarding unit according to an embodiment of this application.

As shown in (a) in FIG. 13, the MAC CE includes an index of a beam corresponding to each forwarding resource in the set of forwarding resources, where the beam indexes are arranged consecutively. The MAC CE further includes an index of a frequency band corresponding to each forwarding resource in the set of forwarding resources, where the frequency band indexes are arranged consecutively.

As shown in (b) in FIG. 13, the MAC CE includes indexes of beams corresponding to each forwarding resource in the forwarding resource set, where the indexes of the beams are not arranged in a consecutive manner. The MAC CE further includes indexes of frequency bands corresponding to each forwarding resource in the forwarding resource set, where the indexes of the frequency bands are not arranged in a consecutive manner. For example, byte 2 is used to activate/deactivate a beam corresponding to the first forwarding resource in the semi-persistent transmission resource set, and byte 3 is used to activate/deactivate a frequency band corresponding to the first forwarding resource in the semi-persistent transmission resource set; byte 4 is used to activate/deactivate a beam corresponding to the second forwarding resource in the semi-persistent transmission resource set, and byte 5 is used to activate/deactivate a frequency band corresponding to the second forwarding resource in the semi-persistent transmission resource set, and so on.

3. Aperiodic forwarding resource

The first indication information may be carried in an RRC message, where the RRC message is used to configure one or more forwarding resource sets, and each forwarding resource set includes one or more forwarding resources.

One possible design is that "NCR-FwdConfig-r18" corresponds to an index of a frequency band, that is, all forwarding resources (including periodic forwarding resources and semi-persistent forwarding resources) of the relay correspond to a frequency band of a forwarding unit, or all forwarding resources correspond to the same frequency band.

Another possible design is that "NCR-AperiodicFwdConfig-r18" corresponds to one or more non-periodic forwarding frequency band resource lists/sets, where each non-periodic forwarding frequency band resource list corresponds to one or more non-periodic forwarding frequency band resources, that is, "NCR-AperiodicFwdBandResource", and each frequency band resource corresponds to an index of a frequency band. Table 8 provides a possible form of the first indication information.

Table 8

```
NCR-AperiodicFwdConfig-r18::= SEQUENCE { (relay-aperiodic forwarding configuration)
aperiodicFwdTimeRsrcToAddModList-r18 (Aperiodic forward time resource to add list)
SEQUENCE (SIZE (1..maxNrofAperiodicFwdTimeResource-r18)) OF NCR-AperiodicFwdTimeResource-r18
OPTIONAL, -- Need N (not required)
aperiodicFwdTimeRsrcToReleaseList-r18 (Aperiodic forward time resource to release list)
SEQUENCE (SIZE (1..maxNrofAperiodicFwdTimeResource-r18)) OF NCR-AperiodicFwdTimeResourceId-r18
OPTIONAL, -- Need N
referenceSCS-r18 SubcarrierSpacing
OPTIONAL, -- Need M (maintenance required)
aperiodicBeamFieldWidth-r18 (aperiodic beam field width) INTEGER (1..6)
OPTIONAL, -- Need M
numberOfFields-r18 INTEGER (1..32)
OPTIONAL, -- Need M
aperiodicFwdBandRsrcToAddModList (Aperiodic forwarding frequency band resource to add list) SEQUENCE (SIZE (1..maxNrofAperiodicFwdBandResource)) OF NCR-AperiodicFwdBandResource
OPTIONAL, -- Need N
aperiodicFwdBandRsrcToReleaseList (Aperiodic forwarding frequency band resource to release list) SEQUENCE (SIZE (1..maxNrofAperiodicFwdBandResource)) OF NCR-AperiodicFwdBandResourceId
OPTIONAL, -- Need N
...
}
NCR-AperiodicFwdTimeResource-r18 ::= SEQUENCE { (relay-aperiodic forwarding time resource configuration)
aperiodicFwdTimeRsrcId-r18 (identifier of the aperiodic forwarding time resource)
NCR-AperiodicFwdTimeResourceId-r18,
slotOffsetAperiodic-r18 (slot offset) INTEGER (0..14),
symbolOffset-r18 (symbol offset) INTEGER (0..maxNrofSymbols-1),
durationInSymbols-r18 (symbol duration) INTEGER (1..28)
}
NCR-AperiodicFwdTimeResourceId-r18 ::= INTEGER (0..maxNrofAperiodicFwdTimeResource-1-r18)
NCR-AperiodicFwdBandResource::= SEQUENCE { (relay-aperiodic forward frequency band resource)
bandIndexId (Band Index) NCR-BandIndexId,
SizeofFlexibleBand (Flexible Band) INTEGER (1..maxNrofBands)
...
}
NCR-BandIndexId ::= INTEGER (0..maxNrofBands-1)
```

As shown in Table 8, an index of a frequency band is configured in "NCR-AperiodicFwdBandResource." In addition, the network device may further configure a plurality of adjacent frequency bands (i.e., flexible frequency bands) through the RRC message. For example, "NCR-AperiodicFwdBandResource" corresponds to (or is bound to) indexes of the plurality of adjacent frequency bands. The number of the plurality of adjacent frequency bands is configured in "SizeofFlexibleBand."

For an aperiodic forwarding resource, the network device may activate the frequency band corresponding to the forwarding resource through DCI.

A possible implementation is that the network device sends DCI to the relay, where the DCI is used to activate the frequency band of the forwarding unit. Correspondingly, the relay receives the DCI from the network device.

For example, the network device activates the frequency band corresponding to the aperiodic forwarding resource through predefined DCI (for example, DCI 2_9). On one hand, the network device may preconfigure a length (or a bit width) of a frequency band field in an RRC message and a maximum quantity of frequency band fields, where the maximum quantity of frequency band fields is greater than or equal to the actual quantity of indicated aperiodic forwarding resources. On the other hand, the network device may further predefine a correspondence between a frequency band field and an aperiodic forwarding resource. For example, field 1 corresponds to the first forwarding resource in the aperiodic

forwarding resource set, field 2 corresponds to the second forwarding resource in the aperiodic forwarding resource set, and so on.

FIG. 14 is a schematic diagram of a frequency band indicator field in DCI according to an embodiment of this application.

As shown in FIG. 14, a maximum quantity of frequency band fields is N, and each field corresponds to one forwarding resource in aperiodic forwarding resource set, to indicate a frequency band corresponding to the forwarding resource.

In another example, the network device reuses existing DCI (for example, DCI 2_8), and the frequency band indicator field is combined with the beam indicator field and the time resource indicator field, to indicate a frequency band for activating an aperiodic forwarding resource. A length N of a field used to indicate a frequency band in the DCI is preconfigured, or is determined according to a quantity of frequency bands configured in an RRC message. For example, J indicates a quantity of frequency bands configured in the RRC message. The frequency band indicator field and the time resource indicator field/beam indicator field are in a one-to-one correspondence, and are mapped to corresponding aperiodic forwarding resources. In other words, one aperiodic forwarding resource corresponds to one frequency band indicator field. $N=\max\{\lceil \log_2(J) \rceil, 1\}$

FIG. 15 is another schematic diagram of a frequency band indicator field in DCI according to an embodiment of this application.

As shown in FIG. 15, the frequency band indicator field in the DCI is combined with the beam indicator field and the time resource indicator field (time resource indicator, TRI), and one aperiodic forwarding resource corresponds to one frequency band indicator field, one beam indicator field, and one time resource indicator field. N is a maximum quantity of frequency band fields, and N is an integer greater than or equal to 1.

Optionally, the first indication information indicates a frequency band of the control unit of the relay; and the method further includes: determining, by the relay, a frequency band of the forwarding unit based on the frequency band of the control unit.

For example, after receiving the first indication information from the network device, the relay determines the frequency band of the forwarding unit based on the frequency band of the control unit of the relay indicated in the first indication information.

It should be understood that the first indication information indicates the frequency band of the control unit of the relay. In this way, the relay may also determine the frequency band of the control unit (or referred to as the operating frequency band of the control unit). In other words, the first indication information is further used to determine the frequency band of the control unit of the relay.

It should also be understood that the first indication information may alternatively be used only to indicate a frequency band of the control unit of the relay. The first indication information includes an index of the frequency band of the control unit. Alternatively, the first indication information includes a start frequency and an end frequency of the frequency band of the control unit, or the first indication information includes a center frequency and a bandwidth of the frequency band of the control unit. The relay may determine the frequency band of the control unit based on the first indication information.

In the following, an example in which the first indication information indicates the frequency band of the control unit, and the relay determines the frequency band of the forwarding unit based on the frequency band of the control unit is used for description.

A possible design of the first indication information is that the first indication information includes an index of the frequency band of the control unit; and the foregoing determining the frequency band of the forwarding unit based on the frequency band of the control unit includes: determining the frequency band of the forwarding unit based on the index of the frequency band of the control unit and the first offset and/or the first coefficient, where the first offset is an offset of the index of the frequency band, and the first coefficient is a coefficient for increasing or decreasing the bandwidth of the frequency band of the control unit.

Optionally, the first offset and/or the first coefficient are/is predefined or configured by the network device. This is not limited in this application.

In an example, the index of the frequency band of the forwarding unit is equal to the index of the frequency band of the control unit plus the first offset. For example, if the index of the frequency band of the control unit is 1 and the first offset is 2, then the index of the frequency band of the forwarding unit is 1+2=3.

In another example, the bandwidth of the frequency band of the forwarding unit is a product of the bandwidth of the frequency band of the control unit and the first coefficient. The relay may determine a corresponding frequency band based on the index of the frequency band of the control unit, and further determine the bandwidth of the frequency band of the forwarding unit based on the bandwidth of the frequency band of the control unit. For example, if the index of the frequency band of the control unit is 1, the corresponding frequency band is 870 MHz to 880 MHz, and the first coefficient is 2, then the bandwidth of the frequency band of the forwarding unit is 20 MHz, and the frequency band of the forwarding unit

may be, for example, a frequency band whose center frequency is the center frequency of the frequency band of the control unit and whose bandwidth is 20 MHz, for example, a frequency band from 865 MHz to 885 MHz.

Optionally, the correspondence between the index of the frequency band of the control unit and the frequency band may be configured by the OAM. For example, the OAM sends second configuration information to the network device and the relay, where the second configuration information is used to configure a correspondence between one or more indexes of the control unit and one or more frequency bands, and each index corresponds to one frequency band. Correspondingly, the network device receives the second configuration information from the OAM, and the relay receives the second configuration information from the OAM.

It may be understood that, in this application, each frequency band may be identified by using a frequency band ID or a frequency band index (band index), that is, the frequency band ID/frequency band index may be used to distinguish different frequency bands. The frequency band ID/frequency band index and the frequency band have a one-to-one correspondence.

For example, the second configuration information includes one or more indexes of the control unit and a center frequency and a bandwidth of a frequency band corresponding to each index, or the second configuration information includes one or more indexes of the control unit and a start frequency and an end frequency of a frequency band corresponding to each index.

In this application, second configuration information corresponding to different relays may be different. For example, the number of frequency bands of the control unit corresponding to different relays may be different. For another example, the control unit of different relays has different correspondence between frequency band indexes and frequency bands. For another example, the width of each frequency band corresponding to different relays may be different. For a specific description of the second configuration information, refer to the explanation of the first configuration information, and details are not described herein again. It should be understood that second configuration information corresponding to different relays may alternatively be the same. This is not limited in this application.

In another possible design of the first indication information, the first indication information includes a start frequency and an end frequency of the frequency band of the control unit, or the first indication information includes a center frequency and a bandwidth of the frequency band of the control unit; and the determining a frequency band of the forwarding unit based on the frequency band of the control unit includes: determining the frequency band of the forwarding unit based on the center frequency of the frequency band of the control unit, the second offset, and/or the first coefficient, where the second offset is an offset of the center frequency of the frequency band, and the first coefficient is a coefficient for increasing or decreasing the bandwidth of the frequency band of the control unit.

Optionally, the second offset and/or the first coefficient are/is predefined or configured by the network device. This is not limited in this application.

It should be noted that the first offset is an offset of an index of the frequency band, the second offset is an offset of a center frequency of the frequency band, and the first offset and the second offset have different meanings. For example, the index of the frequency band may be 0, 1, 2, 3, or Q-1, the first offset may be 1, 2, or k, where Q and k are integers; the center frequency of the frequency band may be 870 MHz, 880 MHz, 890 MHz, or the like, and the second offset may be 10 MHz, 20 MHz, or the like.

In an example, the center frequency of the frequency band of the forwarding unit is equal to the center frequency of the frequency band of the control unit plus the second offset, and the bandwidth of the frequency band of the forwarding unit may be the same as the bandwidth of the frequency band of the control unit. For example, if the center frequency of the frequency band of the control unit is 875 MHz, the bandwidth is 10 MHz, and the second offset is 20 MHz, then the center frequency of the frequency band of the forwarding unit is 895 MHz, and the bandwidth is 10 MHz.

In another example, the bandwidth of the frequency band of the forwarding unit is a product of the bandwidth of the frequency band of the control unit and the first coefficient. For example, if the frequency band of the control unit is 870 MHz to 880 MHz, and the first coefficient is 2, then the bandwidth of the frequency band of the forwarding unit is 20 MHz. The frequency band of the forwarding unit may be, for example, a frequency band whose center frequency is the center frequency of the frequency band of the control unit and whose bandwidth is 20 MHz, for example, 865 MHz to 885 MHz.

In step 530, the relay forwards a signal on the frequency band of the foregoing forwarding unit.

After determining the frequency band of the forwarding unit, the relay forwards a signal on the frequency band, or in other words, the relay forwards a signal based on the frequency band of the foregoing forwarding unit.

Based on the foregoing technical solution, the network device may send, to the relay, the first indication information used to determine the frequency band of the forwarding unit, so that the relay determines the frequency band of the forwarding unit based on the first indication information, thereby facilitating flexible resource configuration, for example, facilitating flexible configuration of an operating frequency band of the forwarding unit of the relay.

The foregoing provides a detailed description of the relay configuration method provided in the embodiments of this application with reference to the accompanying drawings. The following provides a detailed description of an apparatus provided in the embodiments of this application with reference to the accompanying drawings.

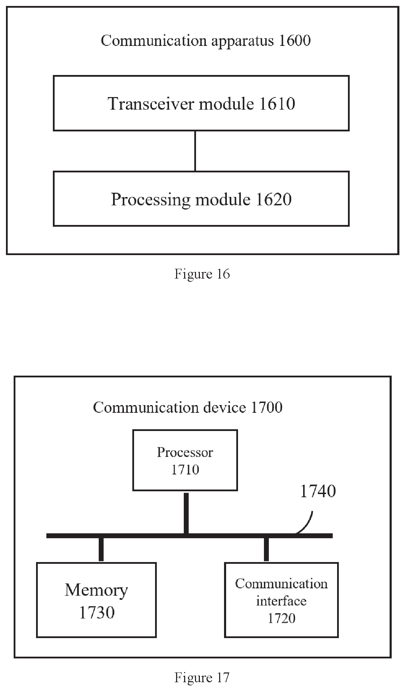

It should be understood that the apparatuses shown in FIG. 16 and FIG. 17 may be configured to implement

functions of the network device or the relay in the foregoing method embodiments, and therefore may also achieve beneficial effects of the foregoing method embodiments. In the embodiments of this application, the apparatus may be the network device in the method embodiment shown in FIG. 5, or may be a component (such as a chip, a chip system, or a processor) configured in the network device, or may be a logical module or software that can implement some or all functions of the network device; or the apparatus may be the relay in the method embodiment shown in FIG. 5, or may be a component (such as a chip, a chip system, or a processor) configured in the relay, or may be a logical module or software that can implement some or all functions of the relay.

FIG. 16 is a schematic block diagram of a communication apparatus 1600 according to an embodiment of this application.

As shown in FIG. 16, the apparatus 1600 includes a transceiver module 1610 and a processing module 1620. The apparatus 1600 may be configured to implement a function of the network device or the relay in the method embodiment shown in FIG. 5.

When the apparatus 1600 is configured to implement the function of the network device in the method embodiment shown in FIG. 5, the processing module 1620 may be configured to generate first indication information, where the first indication information is used to determine a frequency band of a forwarding unit of the relay, and the transceiver module 1610 may be configured to send the first indication information to the relay.

Optionally, the first indication information includes an index of the frequency band of the forwarding unit.

Optionally, the first indication information includes a start frequency and an end frequency of the frequency band of the forwarding unit, or the first indication information includes a center frequency and a bandwidth of the frequency band of the forwarding unit.

Optionally, the first indication information is carried in an RRC message, where the RRC message is used to configure one or more forwarding resource sets, each forwarding resource set includes one or more forwarding resources, each forwarding resource set corresponds to one frequency band of the forwarding unit, each forwarding resource corresponds to one frequency band of the forwarding unit, or the one or more forwarding resource sets correspond to one frequency band of the forwarding unit.

Optionally, the transceiver module 1610 is further configured to send a MAC CE to the relay, where the MAC CE is used to activate a frequency band of the forwarding unit.

Optionally, the LCID in the MAC CE is used to identify the frequency band of the MAC CE used to activate the forwarding unit.

Optionally, the MAC CE includes a first field and a second field, where the first field is used to activate a frequency band of the forwarding unit, the second field is used to activate an access-side beam corresponding to each forwarding resource in a forwarding resource set, and the forwarding resource set includes at least one forwarding resource.

Optionally, the transceiver module 1610 is further configured to send DCI to the relay, where the DCI is used to activate a frequency band of the forwarding unit.

Optionally, the first indication information indicates a frequency band of the control unit of the relay.

Optionally, the first indication information includes an index of the frequency band of the control unit.

Optionally, the first indication information includes a start frequency and an end frequency of the frequency band of the control unit, or the first indication information includes a center frequency and a bandwidth of the frequency band of the control unit.

When the apparatus 1600 is configured to implement a function of the relay in the method embodiment shown in FIG. 5, the transceiver module 1610 may be configured to receive first indication information from a network device, where the first indication information is used to determine a frequency band of a forwarding unit of the relay; and the processing module 1620 may be configured to forward a signal on the frequency band.

Optionally, the first indication information includes an index of the frequency band of the forwarding unit.

Optionally, the first indication information includes a start frequency and an end frequency of the frequency band of the forwarding unit, or the first indication information includes a center frequency and a bandwidth of the frequency band of the forwarding unit.

Optionally, the first indication information is carried in an RRC message, where the RRC message is used to configure one or more forwarding resource sets, each forwarding resource set includes one or more forwarding resources, and each forwarding resource set corresponds to one frequency band of the forwarding unit, or each forwarding resource corresponds to one frequency band of the forwarding unit, or one or more forwarding resource sets correspond to one frequency band of the forwarding unit.

Optionally, the transceiver module 1610 is further configured to receive a MAC CE from the network device, where the MAC CE is used to activate a frequency band of the forwarding unit.

Optionally, the LCID in the MAC CE is used to identify a frequency band of the forwarding unit that is activated by the MAC CE.

Optionally, the MAC CE includes a first field and a second field, where the first field is used to activate a frequency band of the forwarding unit, the second field is used to activate an access-side beam corresponding to each forwarding

resource in the forwarding resource set, and the forwarding resource set includes at least one forwarding resource.

Optionally, the transceiver module 1610 is further configured to receive DCI from the network device, where the DCI is used to activate a frequency band of the forwarding unit.

Optionally, the first indication information indicates a frequency band of the control unit of the relay; and the processing module 1620 is further configured to determine the frequency band of the forwarding unit based on the frequency band of the control unit.

Optionally, the first indication information includes an index of the frequency band of the control unit; and the processing module 1620 is specifically configured to determine the frequency band of the forwarding unit based on the index of the frequency band of the control unit and the first offset and/or the first coefficient, where the first offset is an offset of the index of the frequency band, and the first coefficient is a coefficient for increasing or decreasing the bandwidth of the frequency band of the control unit.

Optionally, the first indication information includes a start frequency and an end frequency of the frequency band of the control unit, or the first indication information includes a center frequency and a bandwidth of the frequency band of the control unit; and the processing module 1620 is specifically configured to determine the frequency band of the forwarding unit based on the center frequency of the frequency band of the control unit and the second offset and/or the first coefficient, where the second offset is an offset of the center frequency of the frequency band, and the first coefficient is a coefficient for increasing or decreasing the bandwidth of the frequency band of the control unit.

For more detailed descriptions of the foregoing modules, directly refer to the related descriptions in the method embodiment shown in FIG. 5. Details are not described herein again.

It should be understood that the division into the modules in the embodiments of this application is an example, and is merely a logical function division, and there may be another division manner in actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software functional module.

FIG. 17 is another schematic block diagram of a communication apparatus 1700 according to an embodiment of this application.

The apparatus 1700 may be a chip system, or may be a device configured with a chip system, where the device is configured to implement the method described in the foregoing method embodiments. In embodiments of this application, the chip system may include a chip, or may include a chip and another discrete component.

As shown in FIG. 17, the apparatus 1700 may include a processor 1710, where the processor 1710 may be configured to execute a computer program or instructions in a memory, to implement the steps performed by the network device or the steps performed by the relay in the method embodiment shown in FIG. 5.

Optionally, the apparatus 1700 further includes a communication interface 1720. The communication interface 1720 may be configured to communicate with another device through a transmission medium, so that the apparatus 1700 can communicate with another device. The communication interface 1720 may be, for example, a transceiver, an interface, a bus, a circuit, or an apparatus capable of implementing a receiving and sending function. The processor 1710 may input and output data by using the communication interface 1720, and is configured to implement the method described in the embodiment corresponding to FIG. 5. Specifically, the apparatus 1700 may be configured to implement the functions of the network device or the relay in the foregoing method embodiments.

Optionally, the apparatus 1700 further includes at least one memory 1730, configured to store program instructions and/or data. The memory 1730 is coupled to the processor 1710. The coupling in this embodiment of this application is an indirect coupling or a communication connection between apparatuses, units, or modules, and may be implemented in an electrical, mechanical, or another form, and is used for information exchange between the apparatuses, units, or modules. The processor 1710 may operate in collaboration with the memory 1730. The processor 1710 may execute the program instructions stored in the memory 1730. At least one of the at least one memory may be included in the processor.

It should be understood that the coupling in the embodiments of this application is an indirect coupling or a communication connection between apparatuses, units, or modules, and may be implemented in an electrical, mechanical, or another form, and is used for information exchange between the apparatuses, units, or modules. The processor 1710 may operate in collaboration with the memory 1730. This application does not limit a specific connection medium between the processor 1710, the communication interface 1720, and the memory 1730 in the embodiments of this application. In this embodiment of this application, the processor 1710, the communication interface 1720, and the memory 1730 are connected through a bus 1740 in FIG. 17. The bus 1740 is represented by a thick line in FIG. 17. A connection manner between other components is merely an example for description, and is not intended to be limiting. The bus may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is used to represent the bus in FIG. 17, but this does not mean that there is only one bus or only one type of bus.

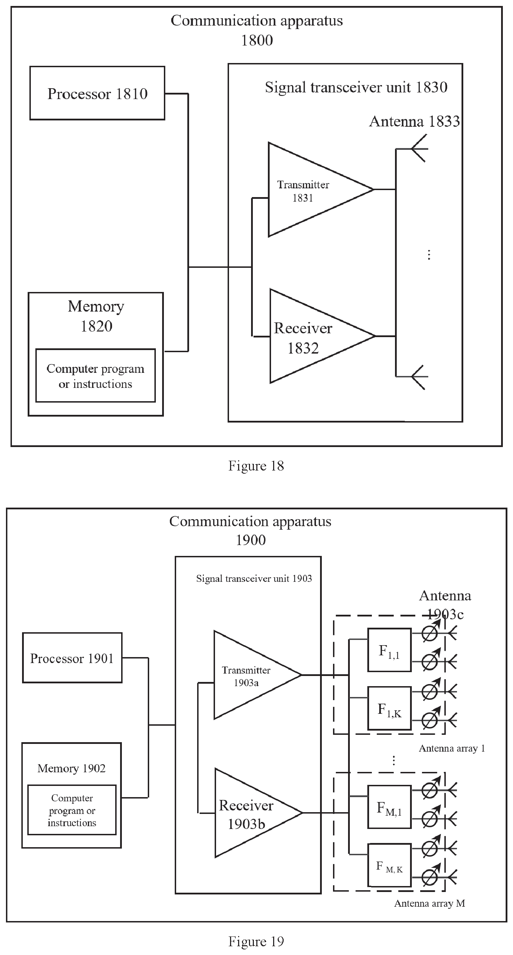

FIG. 18 is yet another schematic structural diagram of a communication apparatus 1800 according to an embodiment of this application.

The communication apparatus 1800 may be, for example, a network device or a terminal, and the apparatus 1800 may be configured to implement the method performed by the network device in the embodiment shown in FIG. 5. The apparatus 1800 logically includes a plurality of parts, such as a processor 1810, a memory 1820, and a signal transceiver unit 1830, which are configured to implement communication and signaling interaction with a network device and a terminal (or a relay), and the like. The memory 1820 stores a computer program or instructions, and when the apparatus 1800 executes the computer program or the instructions, the method shown in FIG. 5 may be implemented. The signal transceiver unit 1830 includes a transmitter 1831, a receiver 1832, and an antenna 1833. For example, when the communication apparatus 1800 is a network device, the receiver 1832 may be configured to receive information through the antenna 1833, and the transmitter 1831 may be configured to send information through the antenna 1833.

FIG. 19 is another schematic structural diagram of a communications apparatus 1900 according to an embodiment of this application.

The communications apparatus 1900 may be, for example, a terminal or a network device, and the apparatus 1900 may be configured to implement the method described in the embodiment shown in FIG. 5. The apparatus 1900 logically includes a plurality of parts, such as a processor 1901, a memory 1902, and a signal transceiver unit 1903. The memory 1902 may be configured to store a computer program (which may also be referred to as code or instructions). The signal transceiver unit 1903 is configured to implement communication and signaling interaction between the network device and the terminal, signal amplification, and the like. The signal transceiver unit 1903 includes a transmitter 1903a, a receiver 1903b, and an antenna 1903c. In the antenna 1903c, one block represents one digital channel, where F in the block is a digital precoding weight, and one phase shifter (a circle plus a slanted arrow) represents one analog channel, which is connected to one or more elements. That is, in practice, one phase shifter may control a plurality of elements, or phase shifters and elements may be cross-connected.

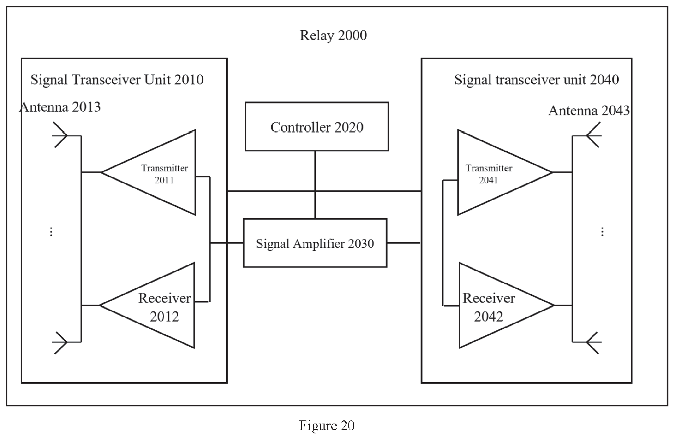

FIG. 20 is a schematic structural diagram of a relay 2000 according to an embodiment of this application.

The relay 2000 may be configured to implement the steps performed by the relay in the embodiment shown in FIG. 5. The relay 2000 logically includes a plurality of parts, such as a signal transceiver unit 2010, a controller 2020, a signal amplifier 2030, and a signal transceiver unit 2040, which are configured to implement communication and signaling interaction with a network device and a terminal device, signal amplification, and the like. The controller 2020 is also referred to as an MT, and other parts may form a radio frequency unit (radio unit, RU) (which may also be referred to as a distributed unit (distributed unit, DU), a distributed radio unit (distributed radio unit, DRU), or the like). The signal transceiver unit 2010 includes a transmitter 2011, a receiver 2012, and an antenna 2013. The signal transceiver unit 2040 includes a transmitter 2041, a receiver 2042, and an antenna 2043.

For example, during downlink communication, one signal transceiver unit 2010 in the relay is configured to receive a signal from the network device, while another signal transceiver unit 2040 is configured to forward the amplified received signal to the terminal device. In addition, the controller 2020 may also communicate with the network device or the terminal device through the signal transceiver unit. For instance, the controller 2020 communicates with the network device through the signal transceiver unit to establish a communication link and perform beam alignment between the relay and the network device; it may also be used to receive configuration/instruction information from the network device, thereby facilitating the network device to control the working time, working state, or working mode of the relay; or it may be used to receive a trigger signal from the terminal device, thereby enabling the relay to enter the corresponding working mode as needed. For another example, the controller 2020 may also determine the working state (e.g., amplification factor, phase) of the signal amplifier based on the instruction information from the network device or its own measurement information. It should be understood that each of these units may be one or more. For example, there may be multiple signal amplifiers 2030, each corresponding to different polarization directions or relay radio frequency channels.

This application further provides a computer program product, where the computer program product includes a computer program (which may also be referred to as code or an instruction). When the computer program is run, the steps performed by the network device or the steps performed by the relay in the method described in the embodiment shown in FIG. 5 can be implemented.

This application further provides a computer-readable storage medium, where the computer-readable storage medium stores a computer program (which may also be referred to as code or an instruction). When the computer program is run, the steps performed by the network device or the steps performed by the relay in the method described in the embodiment shown in FIG. 5 can be implemented.

An embodiment of this application provides a communications system, where the system includes the foregoing network device and relay.

It should be understood that the processor in embodiments of this application may be an integrated circuit chip and has a signal processing capability. In an implementation process, the steps in the foregoing method embodiments may be implemented by an integrated logic circuit in hardware in the processor or by instructions in a form of software. The processor may be a general-purpose processor, a digital signal processor (digital signal processor, DSP), an application-

specific integrated circuit (application-specific integrated circuit, ASIC), a field programmable gate array (field programmable gate array, FPGA) or another programmable logic device, a discrete gate, a transistor logic device, or a discrete hardware component, which may implement or perform the methods, steps, and logical block diagrams disclosed in embodiments of this application. The general-purpose processor may be a microprocessor, or the processor may be any conventional processor or the like. The steps of the methods disclosed with reference to embodiments of this application may be directly implemented by a hardware decoding processor, or may be implemented by a combination of hardware and software modules in the decoding processor. The software module may be located in a mature storage medium in this field, such as a random access memory, a flash memory, a read-only memory, a programmable read-only memory, an electrically erasable programmable memory, or a register. The storage medium is located in the memory, and the processor reads information in the memory and completes the steps of the foregoing methods in combination with hardware of the processor.

It should also be understood that the memory in the embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), which is used as an external cache. By way of example and not limitation, many forms of RAM are available, such as static random access memory (static RAM, SRAM), dynamic random access memory (dynamic RAM, DRAM), synchronous dynamic random access memory (synchronous DRAM, SDRAM), double data rate synchronous dynamic random access memory (double data rate SDRAM, DDR SDRAM), enhanced synchronous dynamic random access memory (enhanced SDRAM, ESDRAM), synchlink dynamic random access memory (synchlink DRAM, SLDRAM), and direct rambus random access memory (direct rambus RAM, DR RAM). It should be noted that the memory of the systems and methods described in this specification is intended to include, but not limited to, these and any other memory of suitable types.

The terms "unit," "module," and the like used in this specification may be used to indicate a computer-related entity, hardware, firmware, a combination of hardware and software, software, or software being executed. In the embodiments of this application, the terms "unit" and "module" have the same meaning and may be used interchangeably.

A person of ordinary skill in the art may be aware that, in combination with illustrative logical blocks (illustrative logical block) and steps (step) described in embodiments disclosed in this specification, these functions may be implemented by electronic hardware or a combination of computer software and electronic hardware. Whether these functions are performed by hardware or software depends on particular applications and design constraints of the technical solutions. A person skilled in the art may use different methods to implement the described functions for each particular application, but it should not be considered that the implementation goes beyond the scope of this application. In several embodiments provided in this application, it should be understood that the disclosed apparatuses, devices, and methods may be implemented in other ways. For example, the foregoing apparatus embodiments are merely examples. For example, the division into units is merely logical function division, and there may be another division manner in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one place, or may be distributed on a plurality of network units. Some or all of the units may be selected according to actual needs to achieve the objectives of the solutions in embodiments of this application.

In addition, functional units in embodiments of this application may be integrated into one processing unit, each of the units may exist alone physically, or two or more units may be integrated into one unit.

In the foregoing embodiments, functions of the functional units may be implemented completely or partially by software, hardware, firmware, or any combination thereof. When software is used to implement the embodiments, the embodiments may be implemented completely or partially in a form of a computer program product. The computer program product includes one or more computer instructions (programs). When the computer program instructions (programs) are loaded and executed on a computer, the procedure or functions according to embodiments of this application are completely or partially generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or

microwave) manner. The computer-readable storage medium may be any usable medium that can be accessed by the computer, or a data storage device, such as a server or a data center, integrating one or more usable media. The usable medium may be a magnetic medium (for example, a floppy disk, a hard disk drive, or a magnetic tape), an optical medium (for example, a digital versatile disc (digital versatile disc, DVD)), a semiconductor medium (for example, a solid state disk (solid state disk, SSD)), or the like.

When the functions are implemented in the form of software functional units and sold or used as an independent product, they may be stored in a computer-readable storage medium. Based on such an understanding, the technical solutions of this application essentially, or the part contributing to the technology, or some of the technical solutions may be implemented in the form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but the protection scope of this application is not limited thereto. Any variation or replacement readily figured out by a person skilled in the art within the technical scope disclosed in this application should fall within the protection scope of this application. Therefore, the protection scope of this application should be determined by the protection scope of the claims.

## Claims

**1.** A relay configuration method, comprising:

receiving first indication information from a network device, wherein the first indication information is used to determine a frequency band of a relay forwarding unit;
performing signal forwarding on the frequency band.

**2.** The method according to claim 1, wherein the first indication information comprises an index of the frequency band of the forwarding unit.

**3.** The method according to claim 1, wherein the first indication information comprises a start frequency and an end frequency of the frequency band of the forwarding unit, or the first indication information comprises a center frequency and a bandwidth of the frequency band of the forwarding unit.

**4.** The method according to any one of claims 1 to 3, wherein the first indication information is carried in a radio resource control RRC message, the RRC message is used to configure one or more forwarding resource sets, each forwarding resource set comprises one or more forwarding resources, wherein each forwarding resource set corresponds to one frequency band of the forwarding unit, or each forwarding resource corresponds to one frequency band of the forwarding unit, or the one or more forwarding resource sets correspond to one frequency band of the forwarding unit.

**5.** The method according to claim 4, wherein the method further comprises:
receiving a Media Access Control MAC control element CE from the network device, wherein the MAC CE is used to activate the frequency band of the forwarding unit.

**6.** The method according to claim 5, wherein the logical channel identifier LCID in the MAC CE is used to identify a frequency band for which the MAC CE is used to activate the forwarding unit.

**7.** The method according to claim 5, wherein the MAC CE comprises a first field and a second field, the first field is used to activate a frequency band for which the forwarding unit is activated, the second field is used to activate an access-side beam corresponding to each forwarding resource in a forwarding resource set, and the forwarding resource set comprises at least one forwarding resource.

**8.** The method according to claim 4, wherein the method further comprises:
receiving downlink control information DCI from the network device, wherein the DCI is used to activate a frequency band for which the forwarding unit is activated.

**9.** The method according to claim 1, wherein the first indication information indicates a frequency band for which the control unit of the relay device is activated; and the method further comprises:

determining the frequency band of the forwarding unit based on the frequency band of the control unit.

**10.** The method according to claim 9, wherein the first indication information comprises an index of the frequency band of the control unit; and the determining the frequency band of the forwarding unit based on the frequency band of the control unit comprises:
determining the frequency band of the forwarding unit based on the index of the frequency band of the control unit and a first offset and/or a first coefficient, wherein the first offset is an offset of an index of the frequency band, and the first coefficient is a coefficient for increasing or decreasing the bandwidth of the frequency band of the control unit.

**11.** The method according to claim 9, wherein the first indication information comprises a start frequency and an end frequency of the frequency band of the control unit, or the first indication information comprises a center frequency and a bandwidth of the frequency band of the control unit; and the determining the frequency band of the forwarding unit based on the frequency band of the control unit comprises:
determining the frequency band of the forwarding unit based on a center frequency of the frequency band of the control unit and a second offset and/or a first coefficient, wherein the second offset is an offset of a center frequency of the frequency band, and the first coefficient is a coefficient for increasing or decreasing the bandwidth of the frequency band of the control unit.

**12.** A relay configuration method, comprising:

generating first indication information, wherein the first indication information is used to determine a frequency band of a forwarding unit of a relay;
sending the first indication information to the relay.

**13.** The method according to claim 12, wherein the first indication information comprises an index of the frequency band of the forwarding unit.

**14.** The method according to claim 12, wherein the first indication information comprises a start frequency and an end frequency of the frequency band of the forwarding unit, or the first indication information comprises a center frequency and a bandwidth of the frequency band of the forwarding unit.

**15.** The method according to any one of claims 12 to 14, wherein the first indication information is carried in a radio resource control RRC message, the RRC message is used to configure one or more forwarding resource sets, each forwarding resource set comprises one or more forwarding resources, wherein each forwarding resource set corresponds to one frequency band of the forwarding unit, or each forwarding resource corresponds to one frequency band of the forwarding unit, or the one or more forwarding resource sets correspond to one frequency band of the forwarding unit.

**16.** The method according to claim 15, wherein the method further comprises:
sending a Media Access Control MAC control element CE to the relay, wherein the MAC CE is used to activate the frequency band of the forwarding unit.

**17.** The method according to claim 16, wherein the logical channel identifier LCID in the MAC CE is used to identify a frequency band for which the MAC CE is used to activate the forwarding unit.

**18.** The method according to claim 16, wherein the MAC CE comprises a first field and a second field, the first field is used to activate a frequency band for which the forwarding unit is activated, the second field is used to activate an access-side beam corresponding to each forwarding resource in a forwarding resource set, and the forwarding resource set comprises at least one forwarding resource.

**19.** The method according to claim 15, wherein the method further comprises:
sending downlink control information DCI to the relay, wherein the DCI is used to activate the frequency band for which the forwarding unit is activated.

**20.** The method according to claim 12, wherein the first indication information indicates a frequency band of the control unit of the relay.

**21.** The method according to claim 20, wherein the first indication information comprises an index of the frequency band of

the control unit.

**22.** The method according to claim 20, wherein the first indication information comprises a start frequency and an end frequency of the frequency band of the control unit, or the first indication information comprises a center frequency and a bandwidth of the frequency band of the control unit.

**23.** A communication system, wherein the communication system comprises a relay and a network device, the relay is configured to implement the method according to any one of claims 1 to 11, and the network device is configured to implement the method according to any one of claims 12 to 22.

**24.** A communication apparatus, comprising a module configured to implement the method according to any one of claims 1 to 11, or comprising a module configured to implement the method according to any one of claims 12 to 22.

**25.** A communication apparatus, comprising a processor and a memory, wherein

The memory is configured to store a computer program;
the processor is configured to invoke the computer program, so that the apparatus implements the method according to any one of claims 1 to 11, or implements the method according to any one of claims 12 to 22.

**26.** A computer-readable storage medium, wherein the storage medium stores a computer program or instructions, and when the computer program or the instructions is executed by a computer, the method according to any one of claims 1 to 11 or the method according to any one of claims 12 to 22 is implemented.

**27.** A computer program product, wherein the computer program product comprises an instruction, and when the instruction is run by a computer, the method according to any one of claims 1 to 11 or the method according to any one of claims 12 to 22 is implemented.

Network device
Relay
Terminal
a)
Network device
Relay 1
Relay 2
Terminal
b)
Reflector
Network device
Terminal
c)

FIG. 1

Terminal
Relay
Base station
210, RRC message, wherein the RRC message is used to configure the forwarding resource
211, MAC CE, wherein the MAC CE is used to activate the aforementioned forwarding resource
212, DCI, wherein the DCI is used to activate the aforementioned forwarding resource
Forward downlink signal
220, downlink signal
230, uplink signal
Forward uplink signal

FIG. 2

| R | C | A/D | Identifier of resource collection | Byte 1 |
|---|---|---|---|---|
| R | R | Beam index $ID_0$ | | Byte 2 |
| ... | | | | |
| R | R | Beam index $ID_{N-1}$ | | Byte N+1 |

FIG. 3

| R | Downlink TCI state indicator | Byte 1 |
|---|---|---|

a)

| R | Uplink TCI state or SRI | Byte 1 |
|---|---|---|

b)

Figure 4

500
Relay
Network device
510: generate first indication information, where the first indication information is used to determine the frequency band of the relay's forwarding unit.
520: the first indication information
530: forward a signal on the frequency band of the forwarding unit.

Figure 5

Control unit
Forwarding unit
Forwarding unit
Forwarding unit
...
Forwarding unit
Frequency domain
Band 0
Band 1
Band 2
Band X-1

Figure 6

Band 0
Band 1
Band 2
Band K-1
Frequenc
y domain
Flexible
frequency band

Figure 7

R
Downlink TCI state ID
Byte 1
R
R
Band index
Byte 2
a)
R
Uplink TCI state ID or
SRI
Byte 1
R
R
Band index
Byte 2
b)

Figure 8

R
R
Frequency band
index
Byte 1

Figure 9

Band 0
Band 1
Band 2
Band K-1
Frequenc
y domain

Figure 10

| R | C | A/D | Resource Set ID | Byte 1 |
|---|---|---|---|---|
| R | R | Band index ID $_0$ | | Byte 2 |
| ... | | | | |
| R | R | Frequency band index ID $_{N-1}$ | | Byte N+1 |

Figure 11

| R | C | A/D | Resource Set ID $_0$ | Byte 1 |
|---|---|---|---|---|
| R | R | Band index ID $_0$ | | Byte 2 |
| ... | | | | |
| R | R | Frequency band index ID $_{N-1}$ | | Byte N+1 |
| R | R | R | Resource Set ID $_1$ | Byte N+2 |
| R | R | Frequency band index ID $_N$ | | Byte N+3 |
| ... | | | | |
| R | R | Frequency band index ID $_{N+M-1}$ | | Byte N+M+2 |

Figure 12

| | | | | |
|---|---|---|---|---|
| R | C | A/D | Resource set ID | Byte 1 |
| R | R | Beam index ID $_0$ | | Byte 2 |
| ... | | | | |
| R | R | Beam Index ID $_{N-1}$ | | Byte N+1 |
| R | R | Band index ID $_0$ | | Byte N+2 |
| ... | | | | |
| R | R | Band index ID $_{N-1}$ | | Byte 2N+1 |

a)

| | | | | |
|---|---|---|---|---|
| R | C | A/D | Resource Set ID | Byte 1 |
| R | R | Beam index ID $_0$ | | Byte 2 |
| R | R | Frequency band index ID $_0$ | | Byte 3 |
| ... | | | | |
| R | R | Beam Index ID $_{N-1}$ | | Byte 2N |
| R | R | Band index ID $_{N-1}$ | | Byte 2N+1 |

b)

Figure 13

N
Band 1
Band 2
Band 3
...
Band K
...

Figure 14

3N
Beam 1
TRI 1
Band 1
Beam 2
TRI 2
Band 2
...
Beam K
TRI K
Band K

Figure 15

Communication apparatus 1600
Transceiver module 1610
Processing module 1620

Figure 16

Communication device 1700
Processor 1710
1740
Memory 1730
Communication interface 1720

Figure 17

Communication apparatus
1800
Processor 1810
Signal transceiver unit 1830
Antenna 1833
Transmitter
1831
Memory
1820
Receiver
1832
Computer program
or instructions

Figure 18

Communication apparatus
1900
Signal transceiver unit 1903
Antenna
1903c
Processor 1901
Transmitter
1903a
$F_{1,1}$
$F_{1,K}$
Antenna array 1
Memory 1902
Computer
program or
instructions
Receiver
1903b
$F_{M,1}$
$F_{M,K}$
Antenna array M

Figure 19

Relay 2000
Signal Transceiver Unit 2010
Antenna 2013
Transmitter 2011
Receiver 2012
Controller 2020
Signal Amplifier 2030
Signal transceiver unit 2040
Antenna 2043
Transmitter 2041
Receiver 2042

Figure 20

**INTERNATIONAL SEARCH REPORT**

International application No. **PCT/CN2024/138118**

**A. CLASSIFICATION OF SUBJECT MATTER**

H04W72/04(2023.01)i

According to International Patent Classification (IPC) or to both national classification and IPC

**B. FIELDS SEARCHED**

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNTXT, ENTXT, WPABS, DWPI, VCN, CNKI, 3GPP: 中继, 指示, 频带, 频段, 频点, 频率, 分量载波, DCI, MAC CE, RRC, 激活, 索引, 标识, relay, indicating, frequency band, frequency, component carrier, CC, activation, index

**C. DOCUMENTS CONSIDERED TO BE RELEVANT**

| Category* | Citation of document, with indication, where appropriate, of the relevant passages | Relevant to claim No. |
|---|---|---|
| X | CN 116508373 A (BEIJING XIAOMI MOBILE SOFTWARE CO., LTD.) 28 July 2023 (2023-07-28)<br>description, paragraphs 0142-0208, and figures 2-7 | 1-27 |
| X | CN 115733534 A (HUAWEI TECHNOLOGIES CO., LTD.) 03 March 2023 (2023-03-03)<br>description, paragraphs 0158-0209 | 1-27 |
| X | CN 114731572 A (BEIJING XIAOMI MOBILE SOFTWARE CO., LTD.) 08 July 2022 (2022-07-08)<br>description, paragraphs 0056-0132 | 1-27 |
| A | CN 108633055 A (HUAWEI TECHNOLOGIES CO., LTD.) 09 October 2018 (2018-10-09)<br>entire document | 1-27 |
| A | WO 2022271071 A1 (TELEFONAKTIEBOLAGET LM ERICSSON (PUBL)) 29 December 2022 (2022-12-29)<br>entire document | 1-27 |
| A | WO 2023053094 A1 (LENOVO (SINGAPORE) PTE. LTD.) 06 April 2023 (2023-04-06)<br>entire document | 1-27 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **16 March 2025** | **20 March 2025** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2024/138118**

| Patent document cited in search report | | | Publication date (day/month/year) | Patent family member(s) | | | Publication date (day/month/year) |
|---|---|---|---|---|---|---|---|
| CN | 116508373 | A | 28 July 2023 | WO | 2023092467 | A1 | 01 June 2023 |
| | | | | EP | 4440219 | A1 | 02 October 2024 |
| | | | | EP | 4440219 | A4 | 08 January 2025 |
| | | | | US | 2025016579 | A1 | 09 January 2025 |
| CN | 115733534 | A | 03 March 2023 | WO | 2023029883 | A1 | 09 March 2023 |
| CN | 114731572 | A | 08 July 2022 | WO | 2023164908 | A1 | 07 September 2023 |
| CN | 108633055 | A | 09 October 2018 | EP | 3595382 | A1 | 15 January 2020 |
| | | | | EP | 3595382 | A4 | 18 March 2020 |
| | | | | EP | 3595382 | B1 | 07 February 2024 |
| | | | | US | 2020021404 | A1 | 16 January 2020 |
| | | | | US | 11128412 | B2 | 21 September 2021 |
| | | | | WO | 2018171689 | A1 | 27 September 2018 |
| WO | 2022271071 | A1 | 29 December 2022 | | None | | |
| WO | 2023053094 | A1 | 06 April 2023 | US | 2024413942 | A1 | 12 December 2024 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202311800807